# EUROPÄISCHE PATENTANMELDUNG

(11) **EP 4 238 860 A2**
(43) Veröffentlichungstag der Anmeldung: **06.09.2023**
(21) Anmeldenummer: 23156563.1
(22) Anmeldetag: 14.02.2023
(51) Int. Cl.: B62M 6/55

(54) **ANTRIEBSANORDNUNG**

(30) Priorität: 01.03.2022 DE 102022202102; 27.06.2022 DE 102022206431
(71) Anmelder: Robert Bosch GmbH, 70442 Stuttgart (DE)
(72) Erfinder: Nguyen, Quoc-Dat, 72654 Neckartenzlingen (DE); Schumacher, Christoph, 72144 Dusslingen (DE); Binder, Julian, 72827 Wannweil (DE); Zimmermann, Christoph, 72770 Reutlingen (DE); Hettinger, Daniel, 72770 Reutlingen-Bronnweiler (DE); Braun, Sigmund, 72127 Kusterdingen (DE); Kimmich, Peter, 71144 Steinenbronn (DE); Elter, Alexander, 68723 Oftersheim (DE); Schwenk, Daniel, 72280 Dornstetten (DE); Hundt, Harald, 73101 Aichelberg (DE); Holst, Stefan, 72760 Reutlingen (DE); Landenberger, Tobias, 73614 Schorndorf (DE); Dillmann, Adolf, 72525 Muensingen (DE)

(57) **Zusammenfassung**

Die Erfindung betrifft eine Antriebsanordnung (1) eines mit Muskelkraft und/oder Motokraft betreibbaren Fahrzeugs (100), umfassend: eine Antriebseinheit (2), eine Rahmenschnittstelle (3), wobei die Antriebseinheit (2) zumindest teilweise zwischen einer ersten Wand (31) und einer zweiten Wand (32) der Rahmenschnittstelle (3) angeordnet ist, wobei die Antriebseinheit (2) eine Durchgangsbohrung (20) aufweist, zwei Hülsen (41, 42) die beidseitig in die Durchgangsbohrung (20) der Antriebseinheit (2) eingesteckt sind, und einen Durchgangsbolzen (5), der durch die Durchgangsbohrung (20) und die beiden Hülsen (41, 42) durchgesteckt ist und die Antriebseinheit (2) an jeder der beiden Wände (31, 32) hält.

## Beschreibung

### Stand der Technik

Die vorliegende Erfindung betrifft eine Antriebsanordnung und ein die Antriebsanordnung umfassendes Fahrzeug.

Bekannt sind Antriebsanordnungen mit zwischen zwei Wänden einer Rahmenschnittstelle gehaltenen Antriebseinheiten. Die Antriebseinheit wird mit den beiden gegenüberliegenden Wänden verschraubt. Üblicherweise ist dabei ein Spalt zwischen der Antriebseinheit und einer der Wände zu überbrücken. Um dies zu ermöglichen kann beispielsweise ein Halteblech an der Antriebseinheit vorgesehen sein, welches zum Überbrücken des Spalts elastisch verformt wird. Dies kann sich jedoch ungünstig auf die mechanische Belastung und die Dichtigkeit der Antriebsanordnung auswirken.

### Offenbarung der Erfindung

Die erfindungsgemäße Antriebsanordnung mit den Merkmalen des Anspruchs 1 zeichnet sich demgegenüber dadurch aus, dass eine belastungstechnisch vorteilhafte Halterung einer Antriebseinheit innerhalb eines Gehäuses ermöglicht wird. Zusätzlich wird eine besonders einfache und kostengünstige Herstellung und Montage der Antriebsanordnung ermöglicht. Dies wird erreicht durch eine Antriebsanordnung, umfassend eine Antriebseinheit, und eine Rahmenschnittstelle. Die Antriebseinheit ist zumindest teilweise zwischen einer ersten Wand und einer zweiten Wand der Rahmenschnittstelle angeordnet. Vorzugsweise sind die erste Wand und die zweite Wand mittels einer Verbindungswand miteinander verbunden, insbesondere sodass erste Wand, zweite Wand und Verbindungwand gemeinsam einen einstückigen U-förmigen Rahmen bilden. Die Antriebseinheit weist eine Durchgangsbohrung auf. Ferner umfasst die Antriebsanordnung zwei Hülsen, die beidseitig, das heißt an beiden Enden der Durchgangsbohrung, in die Durchgangsbohrung der Antriebseinheit eingesteckt sind, und einen Durchgangsbolzen, der durch die Durchgangsbohrung und die beiden Hülsen durchgesteckt ist. Der Durchgangsbolzen hält dabei, insbesondere indirekt über die beiden Hülsen, die Antriebseinheit an jeder der beiden Wände.

Mit anderen Worten wird bei der Antriebsanordnung eine Durchsteckverbindung vorgesehen, welche die Antriebseinheit an der Rahmenschnittstelle hält, indem ein Durchgangsbolzen durch die Antriebseinheit durchgesteckt ist. Dadurch ergeben sich zahlreiche Vorteile. Zum einen kann dadurch eine besonders einfache Montage und Demontage der Antriebsanordnung an bzw. von der Rahmenschnittstelle erfolgen. Beispielsweise kann der Durchgangsbolzen auf der Seite von einer der beiden Wände betätigt werden, das heißt beispielsweise eingesteckt, gedreht, oder herausgezogen werden. Dies ist besonders vorteilhaft aufgrund der in der Anwendung an einem Elektrofahrrad eingeschränkten Zugänglichkeit auf der Seite des Kettenblatts. Die Betätigbarkeit des Durchgangsbolzens kann dementsprechend auf der gegenüberliegenden Seite vorgesehen sein. Weiterhin kann durch die Verwendung von einem Durchgangsbolzen mit relativ großen Durchmesser eine besonders robuste Verbindung, insbesondere hinsichtlich Querbelastungen, erzielt werden. Beispielsweise kann dadurch auch ein Rutschen einer Schraubenverbindung vermieden werden. Durch die Hülsen kann zudem ein gewünschter Belastungszustand der Antriebseinheit optimal eingestellt werden. Beispielsweise kann durch entsprechende Auslegung der Hülsen ein neutraler Einbauzustand der Antriebseinheit bereitgestellt werden, in welchem keine axialen Kräfte, insbesondere bezogen auf eine Längsachse des Durchgangsbolzens, auf die Antriebseinheit wirken. Alternativ können die Hülsen beispielsweise so ausgelegt werden, dass durch die Verspannung mittels des Durchgangsbolzens eine leichte oder starke Druckbeanspruchung der Antriebseinheit in axialer Richtung wirkt, was sich vorteilhaft auf eine Dichtigkeit der Antriebseinheit gegenüber einem Fluideintritt auswirken kann. Die Hülsen ermöglichen außerdem eine vorteilhafte Verteilung von auf die Antriebseinheit wirkenden mechanischen Kräften, insbesondere durch eine vergrößerte Kontaktfläche von Antriebseinheit und den Befestigungselementen, die die Antriebseinheit an der Rahmenschnittstelle halten. Dies ist besonders vorteilhaft, wenn die Antriebseinheit oder ein Gehäuse der Antriebseinheit aus Aluminium oder Magnesium gebildet ist. Die Hülsen können dabei beispielsweise aus einem härteren Material, wie zum Beispiel Stahl gebildet sein. Dadurch kann eine besonders stabile Befestigung mit verringerter Gefahr der Beschädigung der Antriebseinheit oder dessen Gehäuse bereitgestellt werden. Ferner erlauben die Hülsen eine besonders einfache Anpassbarkeit beispielsweise an verschiedene Rahmenschnittstellen und/oder an verschiedene Toleranzgrade der Rahmenschnittstelle.

Die Unteransprüche haben bevorzugte Weiterbildungen der Erfindung zum Inhalt.

Vorzugsweise berühren sich die beiden Hülsen innerhalb der Durchgangsbohrung. Mittels des Durchgangsbolzens sind die beiden Hülsen dabei gegeneinander verspannt. Dadurch, dass die Hülsen sich in der Durchgangsbohrung berühren, können die axialen Kräfte, welche bedingt durch die Befestigung an der Rahmenschnittstelle auftreten können, durch die Hülsen aufgenommen werden, sodass die mechanische Belastung der Antriebseinheit reduziert wird.

Bevorzugt weist jede Hülse einen Schaft und einen Flansch auf. Der Schaft ist vorzugsweise hohlzylindrisch ausgebildet, und bevorzugt ist der Flansch an einem axialen Ende des Schafts angeordnet und weist einen größeren Außendurchmesser als der Schaft auf. Der Schaft ist dabei zumindest teilweise innerhalb der Durchgangsbohrung angeordnet, und der Flansch ist außerhalb der Durchgangsbohrung angeordnet. Insbesondere ist der Flansch an einer die Durchgangsbohrung umgebende Stirnseite der Antriebseinheit anlegbar ausgebildet und kann eine Einstecktiefe des Schafts der Hülse genau definieren. Dadurch kann die gewünschte mechanische Belastung besonders einfach und genau eingestellt werden.

Besonders vorteilhaft ist es, wenn der Flansch der Hülsen mit unterschiedlichen Dicken, insbesondere bezüglich der Axialrichtung der Hülse, bereitstellbar ist. Beispielsweise kann der Flansch einer Hülse einer ersten Ausführungsform eine erste Dicke aufweisen, wobei der Flansch einer Hülse einer zweiten Ausführungsform eine zweite Dicke aufweisen kann, die mindestens das 1,5-fache, bevorzugt mindestens das Doppelte, insbesondere mindestens das dreifache, der ersten Dicke beträgt. Dadurch ergibt sich der Vorteil, dass die Breite der Antriebsanordnung, vorzugsweise gemessen entlang einer Axialrichtung der Durchgangsbohrung, auf besonders einfache und kostengünstige Weise variabel ist. Beispielsweise kann die Breite der Antriebsanordnung dabei durch Variation der Dicke der Flansche der Hülsen an unterschiedlich breite Rahmenschnittstelle angepasst werden, sodass die Antriebsanordnung besonders flexibel und kostengünstig eingesetzt werden kann.

Besonders bevorzugt weist jede Hülse ein Dämpfungselement auf, welches an einer der Antriebseinheit zugewandten Seite des Flansches angeordnet ist. Das Dämpfungselement ist dabei aus einem schwingungsdämpfenden Material gebildet. Bevorzugt ist das dem Dämpfungselement aus einem Elastomer gebildet. Das Dämpfungselement bildet dabei eine gewisse Dämpfungswirkung durch eine elastische Verformbarkeit zwischen Flansch und Antriebseinheit. Dadurch kann die Antriebsanordnung auf einfache und kostengünstige Weise so ausgelegt werden, dass die Antriebseinheit beispielsweise spielfrei in Axialrichtung der Durchgangsbohrung gehalten wird, indem das Dämpfungselement verformt bzw. auf Druck teilweise verpresst wird. Zusätzlich kann das Dämpfungselement eine Übertragung von Schwingungen und Vibrationen zwischen Antriebseinheit und Rahmenschnittstelle reduzieren. Außerdem bewirkt das Dämpfungselement vorteilhafterweise eine Dichtwirkung zwischen Hülse und Antriebseinheit.

Vorzugsweise umgibt das Dämpfungselement zusätzlich den Schaft zumindest teilweise, bevorzugt vollständig, in Umfangsrichtung. Insbesondere ist das Dämpfungselement somit als Umspritzung des Schafts und der den Schaft zugewandten Seite des Flansches ausgebildet. Das Dämpfungselement bietet somit den Vorteil einer schwingungsmechanisch optimierten Befestigung der Antriebseinheit an der Rahmenschnittstelle. Dies wirkt sich besonders vorteilhaft auf eine Haltbarkeit von Verschraubungen aus, da insbesondere durch die schwingungsdämpfende Wirkung eine Übertragung von Schwingungen und Vibrationen sowie wechselnde dynamische Lasten aufgrund der federnden und dämpfenden Eigenschaften des Dämpfungselements verringert werden. Somit wird auch eine wechselnde mechanische Belastung der Schraubverbindung verringert oder verhindert, wodurch eine hohe Haltbarkeit bereitgestellt werden kann. Zudem kann dadurch beispielsweise ein Auftreten ungewollter Geräusche reduziert werden. Ferner erlaubt das Dämpfungselement einen gewissen Toleranzausgleich. Zudem bietet sich der Vorteil eines zusätzlichen Schutzes vor Korrosion, insbesondere galvanischer Korrosion, beispielsweise wenn die Antriebseinheit ein Gehäuse aus Magnesium aufweist, wobei die Hülsen beispielsweise aus Aluminium gebildet sind. Zudem kann eine axiale und radiale Dichtwirkung an der Antriebseinheit bereitgestellt werden.

Besonders bevorzugt weist das Dämpfungselement an einem dem Flansch gegenüberliegenden axialen Ende einen vorstehenden Dichtwulst auf, welcher axial und radial von dem Schaft vorsteht. Insbesondere steht der Dichtwulst von den restlichen Bereichen des Dämpfungselements axial und radial vor. Als Dichtwulst wird beispielsweise eine ringförmig um das axiale Ende des Dämpfungselements umlaufende Verdickung des Dämpfungselements angesehen. Insbesondere ist an beiden Hülsen jeweils am Dämpfungselement ein vorstehender Dichtwulst vorgesehen. Der Dichtwulst bietet dabei den Vorteil einer verbesserten Abdichtung gegenüber einem Fluideintritt. Insbesondere erfolgt somit die Abdichtung in einer Kontaktebene der Schäfte der beiden sich innerhalb der Durchgangsbohrung berührenden Hülsen und radial außerhalb der Schäfte der Hülsen dadurch, dass die beiden Dichtwulste der Hülsen in axialer Richtung gegeneinander verpresst werden. Zusätzlich sind die Dichtwulste bevorzugt so ausgelegt, dass eine radiale Verpressung mit einem Innenumfang der Durchgangsbohrung erfolgt. Insbesondere kann somit auf zusätzliche Dichtelemente, wie beispielsweise O-Ringe, zwischen der Durchgangschraube und den Hülsen verzichtet werden. Dadurch ergeben sich zahlreiche Vorteile, wie eine Kostenersparnis, da keine präzise Dichtkontur an der Innenseite der Hülsen erforderlich ist. Zudem ist eine einfachere Montage der Antriebsanordnung möglich.

Bevorzugt steht der Dichtwulst in axialer Richtung über eine dem Flansch gegenüberliegende Stirnseite des Schafts über. Insbesondere beträgt ein derartiger axialer Überstand mindestens 20 % einer Wandstärke des Schafts, um eine zuverlässige Verpressung und damit Abdichtung bereitstellen zu können. Weiter bevorzugt sind die beiden Hülsen so ausgelegt, dass diese in einem vollständig in die Durchgangsbohrung eingeschobenen Zustand und gleichzeitig unverspanntem Zustand innerhalb der Durchgangsbohrung in einem vordefinierten Axialabstand zueinander angeordnet sind. Mit anderen Worten ist eine Summe der axialen Längen der Hülsen, wenn diese unverspannt in die Durchgangsbohrung eingesteckt sind, kleiner als eine gesamte axiale Länge der Durchgangsbohrung.

Vorzugsweise ist der vordefinierte Axialabstand so ausgelegt, dass in dem verspannten Zustand der beiden Hülsen, welcher durch den Durchgangsbolzen bewirkt ist, der Axialabstand aufgrund einer elastischen Verformung des Dämpfungselements kompensiert ist. Das heißt, dass die Hülsen sich innerhalb der Durchgangsbohrung berühren. Mit anderen Worten sind die beiden Hülsen derart ausgelegt, dass in dem verspannten Zustand, wenn die beiden Hülsen sich innerhalb der Durchgangsbohrung berühren, das jeweilige Dämpfungselement der beiden Hülsen elastisch verformt ist, insbesondere zwischen Flansch und Antriebseinheit verpresst ist. Dadurch kann besonders einfach ein vorbestimmter Belastungszustand der Antriebseinheit mit geringer vorbestimmter Druckbeanspruchung eingestellt werden. Zudem wird zuverlässig eine Abdichtung mittels des verformten bzw. verpressten Dämpfungselements sichergestellt. Dadurch, dass die Hülsen sich berühren, wird weiterhin eine Aufnahme der axialen mechanischen Kräfte über die Hülsen sichergestellt, sodass beispielsweise eine Verschraubung des Durchgangsbolzens mit hohem Drehmoment ermöglicht werden kann, ohne dass eine zu hohe mechanische Belastung der Antriebseinheit auftritt. Gleichzeitig kann hierdurch eine besonders stabile Verschraubung erfolgen.

Vorzugsweise weist der Flansch von zumindest einer der beiden Hülsen an einer der entsprechenden Wand zugewandten Seite eine Vielzahl an vorstehenden Formschlusselementen auf. Die Formschlusselemente sind so ausgebildet, um sich durch die Verschraubung der Hülse mit der entsprechenden Wand in diese Wand einzudrücken. Insbesondere bewirken die Formschlusselemente durch das Eindrücken in die Wand eine plastische Verformung der Wand, insbesondere derart, dass die Formschlusselemente und der plastisch verformte Bereich der Wand einen Formschluss in einer zur Schraubenachse senkrechten Ebene bilden. Das heißt, die Hülse weist an der Oberfläche des Flansches die vorstehenden Formschlusselemente auf, die sich beim gegeneinander Verschrauben von Hülse und Wand teilweise in die Wand eingraben, insbesondere um in der Ebene der Wandoberfläche einen Mikro-Formschluss zu erzeugen. Dadurch kann eine besonders feste Verbindung der Antriebseinheit mit der Rahmenschnittstelle bereitgestellt werden, da ein Rutschen zwischen Hülse und Wand auf einfache Weise zuverlässig verhindert werden kann.

Besonders bevorzugt ist der Flansch der Hülse zweiteilig ausgebildet und umfasst einen Flansch-Grundkörper und einen Einlegering. Der Flansch-Grundkörper ist dabei zusammen mit dem Schaft der Hülse gemeinsam als ein einstückiges Bauteil ausgebildet. Die Formschlusselemente sind dabei, vorzugsweise ausschließlich, am Einlegering angeordnet. Das heißt, der Einlegering mit den Formschlusselementen wird als separates Bauteil zur restlichen Hülse bereitgestellt. Dadurch ergeben sich insbesondere fertigungstechnische Vorteile, da eine signifikant höhere Flexibilität in der Geometrie und Materialwahl von Hülsen und Formschlusselementen ermöglicht wird. Bevorzugt ist der Einlegering unbeweglich an dem Flansch-Grundkörper fixiert.

Vorzugsweise ist der Einlegering in einer, insbesondere ringförmigen, Nut des Flansch-Grundkörpers angeordnet. Dadurch ergibt sich eine einfache und genau definierte relative Anordnung von Einlegering und Flansch-Grundkörper zur optimalen Positionierung der Formschlusselemente. Bevorzugt ist der Einlegering dabei mittels eines axialen Formschlusses in der Nut gehalten. Das heißt in axialer Richtung der Hülse hinterschneiden sich zumindest Teilbereiche von Einlegering und Flansch-Grundkörper derart, dass der Einlegering zuverlässig in der Nut gehalten ist. Beispielsweise kann der axiale Formschluss in Form einer Verstemmung, beispielsweise durch plastisch verformte Teilbereiche, des Flansch-Grundkörpers ausgebildet sein. Somit kann eine einfache und kostengünstige Herstellung der Hülsen ermöglicht werden.

Bevorzugt sind der Flansch-Grundkörper und der Einlegering aus unterschiedlichen Materialien gebildet. Besonders vorteilhaft ist es, wenn der Einlegering eine größere Härte als der Flansch-Grundkörper aufweist. Vorzugsweise ist der Flansch-Grundkörper, sowie bevorzugt auch der Schaft der Hülse, aus einem Stahl gebildet, der sich gut für eine Kaltumformung eignet.

Dadurch kann eine einfache und kostengünstige Herstellbarkeit der Hülsen ermöglicht werden. Weiter bevorzugt ist der Einlegering aus einem gehärteten Stahl gebildet. Dadurch kann eine besonders beständige Geometrie der Formschlusselemente bereitgestellt werden, wodurch dessen Funktion besonders zuverlässig erreicht wird.

Bevorzugt weist jedes Formschlusselement eine von einer Oberfläche des Flansches der Hülse vorstehende Pyramide auf. Alternativ weist jedes Formschlusselement beispielsweise einen von einer Oberfläche des Flansches der Hülse vorstehenden Kegel auf. Mit anderen Worten sind eine Vielzahl an von der Oberfläche des Flansches vorstehenden Pyramidenspitzen als Formschlusselemente vorgesehen. Besonders bevorzugt sind die Pyramiden dabei spitz ausgebildet, und weisen insbesondere einen Öffnungswinkel von weniger als 60°, bevorzugt weniger als 45°, auf, sodass diese besonders leicht in die Wand eindringen können. Eine derartige Ausgestaltung mit spitzen Pyramiden als Formschlusselementen ist besonders vorteilhaft bei der Verschraubung der Antriebseinheit an Carbonrahmen, das heißt, an Rahmenschnittstellen, welche zumindest teilweise aus einem faserverstärkten, bevorzugt kohlefaserverstärktem, Kunststoff bestehen. Hierbei ergibt sich der Vorteil, dass die spitzen Pyramiden sich in die Netzstruktur des Carbons einprägen können, ohne diese zu schädigen. Insbesondere werden die Fasern beim Eindringen der Pyramiden nicht unterbrochen, sondern können ausweichen und sich um die jeweilige Pyramide herumlegen.

Weiter bevorzugt weist jedes Formschlusselement eine an die Pyramide angrenzende, beispielsweise die Pyramide umgebende, Vertiefung in der Oberfläche des Flansches auf. Vorzugsweise ist die Vertiefung als ringförmige Nut ausgebildet. Besonders bevorzugt ist eine einzelne Vertiefung in der Oberfläche des Flansches ausgebildet sein, an deren radialer Innenseite und/oder Außenseite die Pyramiden angeordnet sind. Alternativ kann pro Pyramide eine separate Vertiefung ausgebildet sein, wobei die die Vertiefung insbesondere unmittelbar an die Pyramide angrenzend angeordnet ist. Durch die Vertiefung kann beispielsweise durch das Eindringen der Pyramide in die Wand verdrängtes Material der Wand aufgenommen werden, um eine zuverlässige und definierte Anlage der Oberfläche des Flansches an der Wand zu ermöglichen. Bevorzugt weist der Flansch von zumindest einer der beiden Hülsen an einem radial äußeren Ende eine Verjüngung auf. Vorzugsweise ist der Flansch scheibenförmig ausgebildet. Die Verjüngung ist dabei an der dem Schaft zugewandten Seite des Flansches angeordnet. Als Verjüngung wird insbesondere eine Reduktion der Dicke des Flansches, insbesondere in axialer Richtung der Hülse angesehen. Insbesondere entspricht die Verjüngung einer Differenz der maximalen Dicke und der minimalen Dicke des Flansches, wobei diese Differenz bevorzugt mindestens 50 %, vorzugsweise maximal 150 %, einer Wandstärke des Schafts der Hülse entspricht. Die Verjüngung des Flansches wird dabei durch das Dämpfungselement kompensiert. Mit anderen Worten ist eine Dicke des Dämpfungselements im Bereich der Verjüngung größer als am restlichen Bereich des Flansches. Vorzugsweise ist eine Gesamtdicke der Dämpfungshülse in axialer Richtung im Bereich des Flansches konstant. Alternativ bevorzugt kann das Dämpfungselement an einem radial äußeren Ende auf der dem Schaft zugewandten Seite eine Aufdickung aufweisen. Durch die Verjüngung des Flansches und das in diesem Bereich dickere Dämpfungselement kann in diesem Bereich eine weichere Zone der Dämpfungshülse bereitgestellt werden, welche eine besonders gute Dichtwirkung zwischen Dämpfungshülse und Antriebseinheit ermöglicht.

Weiter bevorzugt weist die Antriebseinheit zumindest eine vorstehende Ringrippe auf, welche konzentrisch zu einer der beiden Öffnungen angeordnet ist. Vorzugsweise weist die Ringrippe einen konischen oder trapezförmigen Querschnitt auf. Besonders bevorzugt sind die vorstehende Ringrippe und die Verjüngung des Flansches der Hülse auf demselben Radius bezüglich einer Öffnungsachse der Öffnung der Antriebseinheit angeordnet. Mit anderen Worten sind die vorstehende Ringrippe und die Verjüngung des Flansches der Hülse bezogen auf die radiale Richtung der Öffnung der Antriebseinheit auf derselben Höhe angeordnet. Die vorstehende Ringrippe kann somit optimal in den dickeren Bereich des Dämpfungselements eintauchen bei der Montage der Antriebsanordnung, wodurch eine besonders gute Dichtwirkung zwischen Dämpfungshülse und Antriebseinheit bereitgestellt werden kann.

Bevorzugt ist der Durchgangsbolzen an der zweiten Wand befestigt. Dabei verspannt der Durchgangsbolzen die beiden Hülsen und die zweite Wand gegeneinander. Insbesondere spannt der Durchgangsbolzen die beiden Hülsen zwischen einem Bolzenkopf und der zweiten Wand ein. Der Durchgangsbolzen ist dabei an der ersten Wand axial beweglich gehalten. Insbesondere ist der Durchgangsbolzen an der ersten Wand in radialer Richtung, insbesondere im Wesentlichen, unbeweglich gehalten, beispielsweise indem dieser zumindest teilweise innerhalb einer Durchgangsöffnung der ersten Wand angeordnet ist. Dadurch kann auf besonders einfache Weise ein Toleranzausgleich zwischen der Rahmenschnittstelle mit den beiden Wänden und der Antriebseinheit erfolgen, da die axial bewegliche Halterung des Durchgangsbolzens an der ersten Wand als Loslager wirkt, während die Befestigung an der zweiten Wand als Festlager wirkt.

Weiter bevorzugt umfasst die Antriebsanordnung ferner ein Toleranzausgleichselement. Die erste Wand weist dabei zudem eine Wandöffnung auf. Das Toleranzausgleichselement ist hülsenförmig ausgebildet und innerhalb der ersten Wandöffnung angeordnet. Der Durchgangsbolzen weist dabei einen Bolzenkopf auf, der innerhalb des Toleranzausgleichselements angeordnet ist. Insbesondere ist das Toleranzausgleichselement vorgesehen, um in radialer Richtung der Wandöffnung eine spielfreie Anordnung zwischen Bolzenkopf und erster Wand zu ermöglichen. Alternativ bevorzugt kann ein Bolzenschaft des Durchgangsbolzens innerhalb des Toleranzausgleichselements angeordnet sein, wobei in diesem Fall vorzugsweise der Durchgangsbolzen zusammen mit dem Toleranzausgleichselement axial relativ zur ersten Wand beweglich ist. Durch die Bereitstellung eines Toleranzausgleichselements als zusätzliches Bauteil kann der Toleranzausgleich auf besonders einfache Weise und präzise an die jeweilige Toleranzsituation angepasst durchgeführt werden.

Besonders bevorzugt weist das Toleranzausgleichselement eine Gleitlagerbuchse und eine Dämpfungshülle auf, wobei die Dämpfungshülle die Gleitlagerbuchse umgibt. Beispielsweise kann die Dämpfungshülle die Gleitlagerbuchse in Umfangsrichtung vollständig umgeben. Alternativ bevorzugt kann die Dämpfungshülle eine oder mehrere Aussparungen aufweisen. Vorzugsweise ist die Gleitlagerbuchse somit radial innen angeordnet. Dadurch wird ein reibungsarmer Gleitkontakt zwischen Bolzenkopf und Toleranzausgleichselement bereitgestellt, wodurch besonders zuverlässig eine unbeabsichtigte axiale Verspannung zwischen Durchgangsbolzen und erster Wand vermieden werden kann. Die Dämpfungshülle kann dabei einerseits eine Schwingungsübertragung zwischen erster Wand und Bolzenkopf verhindern oder verringern, und andererseits eine zuverlässige Befestigung des Toleranzausgleichselements in der Wandöffnung sicherstellen. Bevorzugt ist die Dämpfungshülle aus einem Elastomer gebildet.

Bevorzugt sind die Gleitlagerbuchse und der Bolzenkopf so ausgelegt, dass der Bolzenkopf die Gleitlagerbuchse in radialer Richtung aufweitet, wenn der Bolzenkopf innerhalb des Toleranzausgleichselements angeordnet ist, insbesondere in vollständig verspanntem Zustand. Beispielsweise kann dies mittels einer entsprechenden Passung zwischen Bolzenkopf und Gleitlagerbuchse erreicht werden. Vorzugsweise ist die Gleitlagerbuchse hierbei in Richtung zur Antriebseinheit hin an dessen innerem Umfang verjüngt ausgebildet, wobei der Bolzenkopf einen größeren Durchmesser aufweist. Dadurch wird erreicht, dass das Toleranzausgleichselement durch den Bolzenkopf radial in die Wandöffnung der ersten Wand eingepresst wird, wodurch eine besonders zuverlässige feste Halterung ermöglicht wird. Zudem kann dadurch eine radiale Toleranz auf Null reduziert werden.

Vorzugsweise ist die Gleitlagerbuchse geschlitzt ausgebildet. Dadurch kann die radiale Aufweitung besonders einfach und gezielt herbeigeführt werden. Zudem kann dadurch ein Einpressen des Toleranzausgleichselements in die Wandöffnung erleichtert werden.

Bevorzugt ist der Schlitz der Gleitlagerbuchse schräg bezüglich einer Axialrichtung der Gleitlagerbuchse, insbesondere bei Betrachtung des Schlitzes aus radialer Richtung, angeordnet. Dadurch kann eine optimale gleichmäßige mechanische Abstützung um den gesamten Umfang und über die gesamte axiale Länge der Gleitlagerbuchse bereitgestellt werden.

Besonders bevorzugt weist die Dämpfungshülle mindestens eine Dichtlippe an einer radialen Außenseite auf. Die mindestens eine Dichtlippe ist vorzugsweise an einem axialen Ende der Dämpfungshülle angeordnet. Bevorzugt sind an beiden axialen Enden jeweils eine Dichtlippe angeordnet. Die mindestens eine Dichtlippe ist dabei so ausgebildet, dass ein axialer Formschluss zwischen Dämpfungshülle und erster Wand vorliegt, wenn das Toleranzausgleichselement innerhalb der ersten Wandöffnung angeordnet ist. Mit anderen Worten kann das Toleranzausgleichselement mittels der Dichtlippe in die erste Wandöffnung eingeclipst werden. Dadurch kann eine besonders einfache und zuverlässige Halterung des Toleranzausgleichselements erreicht werden. Zudem wird eine besonders zuverlässige Dichtwirkung an der ersten Wandöffnung bereitgestellt.

Besonders bevorzugt ist die Dämpfungshülle so ausgebildet, dass die mindestens eine Dichtlippe durch den Bolzenkopf nach radial außen gedrängt wird, wenn sich der Bolzenkopf des Durchgangsbolzens innerhalb des Toleranzausgleichselements befindet. Bevorzugt steht hierbei eine weitere Dichtlippe an der radial inneren Seite des Toleranzausgleichselements über, welche durch den Bolzenkopf nach radial außen gedrückt wird um somit auch die radial äußere Dichtlippe nach außen zu drängen. Vorzugsweise sind diese beiden Dichtlippen an der der Antriebseinheit zugewandten Seite des Toleranzausgleichselements angeordnet. Dadurch wird sichergestellt, dass sich die Dichtlippe immer in Richtung der Antriebseinheit und nach radial außen aufstellt. Beispielsweise wird dadurch zudem verhindert, dass ein Teil der Dichtlippe durch Reibkräfte nach innen in Richtung Gleitlagerbuchse wandert.

Bevorzugt weist die Gleitlagerbuchse an zumindest einem axialen Ende, bevorzugt an beiden axialen Enden, eine radial nach außen vorstehende Rastnase auf. Insbesondere steht die Rastnase von einem zylindrischen Grundkörper der Gleitlagerbuchse radial nach außen. Durch die Rastnase kann eine zuverlässige Befestigung des Toleranzausgleichselements in der Wandöffnung der ersten Wand ermöglicht werden, insbesondere durch einen Formschluss zwischen Rastnase der Gleitlagerbuchse und erster Wand. Vorzugsweise kann die Gleitlagerbuchse durch den Schlitz bei der Montage gestaucht werden, um eine einfache Montage zu ermöglichen. Die Rastnase kann sich vorzugsweise um den gesamten Umfang der Gleitlagerbuchse erstrecken, oder alternativ bevorzugt nur über einen Teil des Umfangs.

Bevorzugt ist der Durchgangsbolzen an der zweiten Wand befestigt, insbesondere mittels einer Schraubverbindung. Der Durchgangsbolzen verspannt dabei die beiden Hülsen und die zweite Wand gegeneinander. Zudem ist der Durchgangsbolzen an der ersten Wand mittels eines Halteelements gehalten. Das Halteelement fixiert den Durchgangsbolzen dabei an der ersten Wand in radialer Richtung. Insbesondere zentriert das Halteelement den Durchgangsbolzen relativ zu einer Wandöffnung der ersten Wand. Mit anderen Worten ist mit dem Halteelement ein zusätzliches Bauteil vorgesehen, das einen radialen Toleranzausgleich für den Durchgangsbolzen an der ersten Wand bereitstellt. Dadurch kann eine besonders präzise Befestigung mit geringsten Toleranzen ermöglicht werden.

Vorzugsweise weist das Halteelement ein Außengewinde auf, mittels welchem das Halteelement in ein Innengewinde der Wandöffnung der ersten Wand eingeschraubt ist. Das Halteelement weist zudem eine Halteöffnung auf, in der ein Bolzenkopf des Durchgangsbolzens gehalten ist. Die Halteöffnung ist dabei so ausgebildet, dass diese sich in Richtung zur zweiten Wand hin aufweitet. Alternativ oder zusätzlich ist der Bolzenkopf des Durchgangsbolzens sich in Richtung zur ersten Wand hin verjüngend ausgebildet. Bevorzugt ist die Aufweitung der Wandöffnung und/oder die Verjüngung des Bolzenkopfes konisch ausgebildet. Für den Fall, dass sowohl Wandöffnung, als auch Bolzenkopf sich aufweitend bzw. verjüngend ausgebildet sind, weisen diese bevorzugt einen identischen Konuswinkel auf. Durch die Aufweitung bzw. Verjüngung kann die radiale Fixierung des Durchgangsbolzens an der ersten Wand auf besonders einfache Weise und präzise erfolgen, insbesondere derart, dass zusätzlich eine präzise Zentrierung relativ zur ersten Wandöffnung erreicht wird.

Bevorzugt ist der Bolzenkopf des Durchgangsbolzens in einer Wandöffnung der ersten Wand angeordnet. Dabei weist der Bolzenkopf besonders bevorzugt ein Außengewinde auf, auf welches das Halteelement, insbesondere mittels eines Innengewindes des Halteelements, aufgeschraubt ist. Das Halteelement weist dabei eine sich in Richtung zur zweiten Wand hin verjüngend Mantelfläche auf. Alternativ oder zusätzlich ist die Wandöffnung der ersten Wand sich in Richtung zur zweiten Wand hin verjüngend ausgebildet. Bevorzugt ist die Verjüngung von Mantelfläche und/oder Wandöffnung als konische Verjüngung ausgebildet. Für den Fall, dass sowohl Mantelfläche des Halteelements, als auch Wandöffnung sich verjüngend ausgebildet sind, weisen die entsprechenden konischen Verjüngungen bevorzugt einen identischen Konuswinkel auf. Durch die Verjüngung(en) kann die radiale Fixierung des Durchgangsbolzens an der ersten Wand durch das Aufschrauben des Halteelements auf den Bolzenkopf auf besonders einfache Weise und präzise erfolgen, insbesondere derart, dass zusätzlich eine präzise Zentrierung von Bolzen mit Halteelement relativ zur Wandöffnung erreicht wird.

Bevorzugt ist das Halteelement auf einem Kunststoff gebildet und/oder weist an dessen Kontaktfläche mit dem Bolzenkopf ein Gummielement und/oder Kunststoffelement auf. Dadurch kann eine Geräuschentwicklung, beispielsweise ein Knarzen, der Antriebsanordnung bei dessen Betrieb verhindert werden.

Weiter bevorzugt weist jede Hülse einen Pressbereich auf. Zwischen dem Pressbereich und der Durchgangsbohrung ist dabei ein Presssitz ausgebildet. Somit wird eine besonders zuverlässige und definierte Halterung und Kraftübertragung zwischen Hülsen und Antriebseinheit ermöglicht.

Vorzugsweise ist der Pressbereich, insbesondere unmittelbar, an den Flansch angrenzend angeordnet. Der Schaft jeder Hülse weist dabei zusätzlich einen Verjüngungsbereich auf, der einen kleineren Außendurchmesser als der Pressbereich aufweist. Insbesondere ist der Verjüngungsbereich somit auf einer dem Flansch gegenüberliegenden Seite des Pressbereichs angeordnet. Dadurch wird ermöglicht, dass der Verjüngungsbereich einfach und leichtgängig in die Durchgangsbohrung der Antriebseinheit eingeführt werden kann, um ein einfaches Einstecken der Hülsen in die Durchgangsbohrung zu ermöglichen.

Bevorzugt weist die Durchgangsbohrung einen Zentrierbereich auf, welcher mittig in der Durchgangsbohrung angeordnet ist, und welcher einen kleineren Innendurchmesser als der Rest der Durchgangsbohrung aufweist. Der Zentrierbereich ist vorgesehen zur Zentrierung der beiden Hülsen innerhalb der Durchgangsbohrung, insbesondere mittels der jeweiligen Verjüngungsbereiche. Bevorzugt ist dabei zwischen jedem Verjüngungsbereich und dem Zentrierbereich eine Spielpassung ausgebildet, sodass ein leichtgängiges Einstecken der Hülsen möglich ist, aber die Zentrierbereiche genau mittig in der Durchgangsbohrung ausgerichtet werden, für eine optimale Ausrichtung der beiden Hülsen.

Besonders bevorzugt ist der Durchgangsbolzen als Schraube ausgebildet und in ein Innengewinde der zweiten Wand eingeschraubt. Dadurch kann eine besonders einfache kostengünstige und aufgrund weniger Bauteile leichtgewichtige Antriebsanordnung bereitgestellt werden.

Bevorzugt ist der Durchgangsbolzen als Schraube ausgebildet und in eine Mutter, welche an der zweiten Wand angeordnet ist, eingeschraubt. Dadurch kann eine besonders robuste Verschraubung bereitgestellt werden, da beispielsweise Durchgangsbolzen und Mutter aus einem härteren Material als die Rahmenschnittstelle ausgebildet werden können. Beispielsweise kann durch Verwendung von Durchgangsbolzen und Mutter aus Stahl ein besonders hohes Drehmoment zum Verschrauben verwendet werden. Zudem kann im Falle einer Beschädigung des Innengewindes ein einfacher Austausch der Mutter erfolgen. Die Verwendung einer Mutter hat zudem den weiteren Vorteil, dass diese durch ein radial vorgegebenes Spiel einen Toleranzausgleich relativ zu der Wandöffnung der ersten Wand darstellt und somit immer exakt fluchtet.

Vorzugsweise ist die Mutter verdrehsicher in einer Ausnehmung der zweiten Wand angeordnet. Beispielsweise können Mutter und Ausnehmung dabei eine unrunde Geometrie aufweisen, beispielsweise in Form von, insbesondere bezüglich einer Achse einer Durchgangsöffnung durch die zweite Wand, tangentialen Abflachungen. Dadurch kann eine besonders einfache Montage der Antriebsanordnung ermöglicht werden.

Weiter bevorzugt weist der Flansch von zumindest einer Hülse eine vorbestimmte Dicke, insbesondere in Richtung parallel zu einer Längsrichtung der Hülse, auf, welche im Wesentlichen gleich einer Wandstärke des Schafts, insbesondere in radialer Richtung, ist. Alternativ bevorzugt weist der Flansch von zumindest einer Hülse eine vorbestimmte Dicke, insbesondere in Richtung parallel zu einer Längsrichtung der Hülse, auf, welche mindestens das 1,5-fache, bevorzugt mindestens das Doppelte, besonders bevorzugt mindestens das Dreifache, einer Wandstärke des Schafts, insbesondere in radialer Richtung, beträgt. Somit kann eine variable Breite der Antriebsanordnung bereitgestellt werden, welche auf besonders einfache und kostengünstige Weise eine Anpassung an unterschiedlich breite Rahmenschnittstelle ermöglicht.

Bevorzugt weist die Antriebseinheit einen Motor und/oder ein Getriebe auf. Durch die spezielle Anordnung und Halterung zwischen den Wänden der Rahmenschnittstelle kann dabei eine optimale zuverlässige Verbindung mit vorteilhafter mechanischer Kräfteverteilung bereitgestellt werden, um eine lange Lebensdauer der Antriebseinheit zu ermöglichen. Zudem kann auf einfache und kostengünstige Weise ein niedriges Gewicht der Antriebsanordnung ermöglicht werden.

Weiterhin führt die Erfindung zu einem Fahrzeug, bevorzugt einem mit Muskelkraft und/oder Motorkraft betreibbaren Fahrzeug, vorzugsweise einem Elektrofahrrad, welches die beschriebene Antriebsanordnung umfasst. Die Rahmenschnittstelle kann beispielsweise Teil eines Fahrzeugrahmens des Fahrzeugs sein.

Bevorzugt umfasst das Fahrzeug einen Fahrzeugrahmen. Die Rahmenschnittstelle der Antriebsanordnung ist dabei integraler Bestandteil des Fahrzeugrahmens, das heißt der Fahrzeugrahmen ist mit der Rahmenschnittstelle als ein einstückiges Bauteil ausgebildet, wobei die Antriebseinheit bevorzugt direkt, also insbesondere ohne zusätzliche dazwischen liegende Bauteile mit der Rahmenschnittstelle verbunden ist. Alternativ bevorzugt ist die Rahmenschnittstelle der Antriebsanordnung und/oder eine oder beide der Wände der Rahmenschnittstelle als ein separates Bauteil zum Fahrzeugrahmen ausgebildet und mit dem Fahrzeugrahmen verbunden, vorzugsweise verschraubt. Beispielsweise kann somit eine indirekte Befestigung der Antriebseinheit an der Rahmenschnittstelle erfolgen.

Besonders bevorzugt umfasst das Fahrzeug ferner ein Kettenblatt, welches mit einer Abtriebswelle der Antriebseinheit verbunden ist. Die zweite Wand der Antriebsanordnung ist dabei auf der Seite des Kettenblatts angeordnet. Insbesondere wenn an der zweiten Wand eine Befestigung als Festlager und an der ersten Wand eine Befestigung als Loslager ausgebildet ist, kann dadurch eine optimale direkte Kraftübertragung zwischen Antriebseinheit und Kettenblatt erfolgen. Zudem wird eine präzise Positionierung des Kettenblatts, also einer genauen Kettenlinie, sichergestellt.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Fahrzeugs mit einer Antriebsanordnung gemäß einem ersten Ausführungsbeispiel der Erfindung,
- Figur 2A: eine Schnittansicht der Antriebsanordnung der Figur 1 in vollständig verschraubtem Zustand,
- Figur 2B: eine Schnittansicht der Antriebsanordnung der Figur 1 vor der Verschraubung,
- Figur 3: ein Detail der Figur 2A,
- Figur 4: eine perspektivische Detailansicht einer Montage der Antriebsanordnung der Figur 2A,
- Figur 5: eine perspektivische Detailansicht eines Toleranzausgleichselements einer Antriebsanordnung gemäß einem zweiten Ausführungsbeispiel der Erfindung,
- Figur 6: eine Schnittansicht einer Antriebsanordnung gemäß einem dritten Ausführungsbeispiel der Erfindung,
- Figur 7: eine Schnittansicht einer Antriebsanordnung gemäß einem vierten Ausführungsbeispiel der Erfindung,
- Figur 8: eine Schnittansicht einer Antriebsanordnung gemäß einem fünften Ausführungsbeispiel der Erfindung,
- Figur 9: ein Detail einer Antriebsanordnung gemäß einem sechsten Ausführungsbeispiel der Erfindung,
- Figur 10: eine Detail-Schnittansicht der Figur 9,
- Figur 11: eine Detail-Schnittansicht einer Antriebsanordnung gemäß einem siebten Ausführungsbeispiel der Erfindung,
- Figur 12: eine weitere Detail-Schnittansicht der Antriebsanordnung der Figur 11,
- Figur 13: eine Schnittansicht einer Antriebsanordnung gemäß einem achten Ausführungsbeispiel der Erfindung,
- Figur 14: eine Schnittansicht einer Antriebsanordnung gemäß einem neunten Ausführungsbeispiel der Erfindung,
- Figur 15: eine Schnittansicht einer Antriebsanordnung gemäß einem zehnten Ausführungsbeispiel der Erfindung,
- Figur 16: eine Schnittansicht einer Antriebsanordnung gemäß einem elften Ausführungsbeispiel der Erfindung,
- Figur 17: eine Detail-Schnittansicht einer Antriebsanordnung gemäß einem zwölften Ausführungsbeispiel der Erfindung,
- Figur 18: eine weitere Detail-Schnittansicht einer Antriebsanordnung gemäß dem zwölften Ausführungsbeispiel der Erfindung, und
- Figur 19: eine Detail-Schnittansicht einer Antriebsanordnung gemäß einem dreizehnten Ausführungsbeispiel der Erfindung.

### Bevorzugte Ausführungsformen der Erfindung

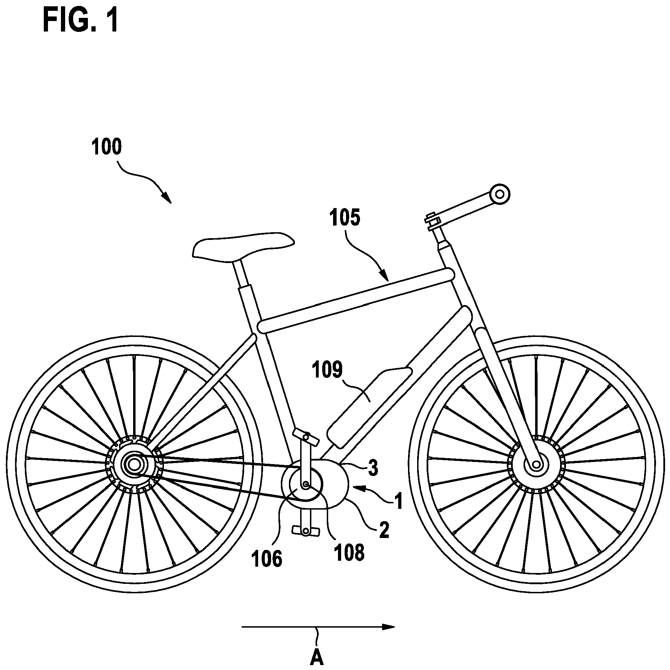

Figur 1 zeigt eine vereinfachte schematische Ansicht eines mit Muskelkraft und/oder Motorkraft betreibbaren Fahrzeugs 100, welches eine Antriebsanordnung 1 gemäß einem ersten Ausführungsbeispiel der Erfindung umfasst. Bei dem Fahrzeug 100 handelt es sich um ein Elektrofahrrad. Die Antriebsanordnung 1 ist im Bereich eines Tretlagers angeordnet und umfasst eine Antriebseinheit 2. Die Antriebseinheit 2 umfasst einen Elektromotor und ein Getriebe und ist vorgesehen, um mittels eines durch den Elektromotor erzeugten Drehmoments eine mittels Muskelkraft erzeugte Tretkraft des Fahrers zu unterstützen. Die Antriebseinheit 2 wird dabei von einem elektrischen Energiespeicher 109 mit elektrischer Energie versorgt.

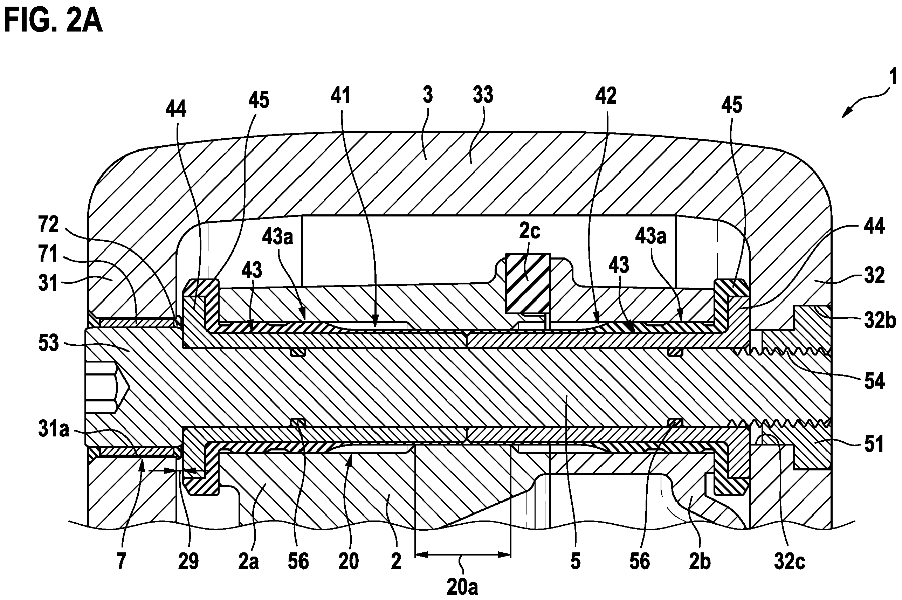

Die Antriebsanordnung 1 des ersten Ausführungsbeispiels ist in einer Schnittansicht in Figur 2A dargestellt. Die Antriebsanordnung 1 umfasst eine U-förmige Rahmenschnittstelle 3, innerhalb der die Antriebseinheit 2 teilweise aufgenommen ist. Die Rahmenschnittstelle 3 ist ein integraler Bestandteil eines Fahrzeugrahmens 105 des Fahrzeugs 100 (vgl. Figur 1). Die Rahmenschnittstelle 3 weist dabei eine erste Wand 31 und eine zweite Wand 32 auf, zwischen welchen die Antriebseinheit 2 angeordnet ist. Die erste Wand 31 und die zweite Wand 32 sind über eine Verbindungswand 33 miteinander verbunden und damit als ein gemeinsames einstückiges Bauteil ausgebildet.

Die Antriebseinheit 2 ist mittels einer Durchsteckverschraubung an der Rahmenschnittstelle 3 befestigt, wie nachfolgend näher beschrieben.

Im Detail weist die Antriebseinheit 2 eine Durchgangsbohrung 20 auf, die die Antriebseinheit 2 in Querrichtung vollständig durchdringt. Insbesondere ist die Durchgangsbohrung 20 in einem Gehäuse, welches bevorzugt aus Aluminium oder Magnesium gebildet ist, der Antriebseinheit 2 ausgebildet. Das Gehäuse der Antriebseinheit 2 kann zweiteilig ausgebildet sind, wobei eine Gehäusedichtung 2c zwischen den beiden Gehäusehälften 2a, 2b angeordnet ist.

In die Durchgangsbohrung 20 sind zwei Hülsen 41, 42 eingesteckt. Die beiden Hülsen 41, 42 sind dabei ausgehend von jeweils einer Seite, das heißt an einem axialen Ende der Durchgangsbohrung 20, in die Durchgangsbohrung 20 eingesteckt. Die Hülsen 41, 42 sind bevorzugt aus Aluminium oder Stahl gebildet.

Jede Hülse 41, 42 weist einen Schaft 43, welcher im Wesentlichen hohlzylindrisch ausgebildet ist und in die Durchgangsbohrung 20 eingesteckt ist, und einen Flansch 44 auf. Der Flansch 44 ist außerhalb der Durchgangsbohrung 20 angeordnet und weist einen größeren Außendurchmesser als der Schaft 43 auf.

Der Schaft 43 weist dabei einen Pressbereich 43a auf, der unmittelbar an den Flansch 44 angrenzend angeordnet ist. Der Pressbereich 43a ist dabei so ausgebildet, dass zwischen dem Pressbereich 43a und der Durchgangsbohrung 20 ein Presssitz, das heißt eine Presspassung, ausgebildet ist.

Mittig in der Durchgangsbohrung 20 ist ein Verjüngungsbereich 20a ausgebildet, in welchem ein Innendurchmesser der Durchgangsbohrung 20 verjüngt ist. Zwischen dem Verjüngungsbereich 20a und den Hülsen 41, 42 ist eine vorzugsweise Spielpassung ausgebildet. Dadurch bewirkt der Verjüngungsbereich 20a eine Zentrierung der Hülsen 41, 42 und somit eine besonders präzise Anordnung der Hülsen 41, 42.

Bevorzugt sind die beiden Hülsen 41, 42 identisch ausgebildet, für eine einfache und kostengünstige Herstellung.

Axiale Längen der Hülsen 41, 42, insbesondere jeweils des Schaft 43, sind derart ausgelegt, dass sich die Hülsen 41, 42 in eingestecktem und vollständig verschraubten Zustand (wie später beschrieben) innerhalb der Durchgangsbohrung 20 berühren.

Zudem umfasst die Antriebsanordnung 1 einen Durchgangsbolzen 5, welcher durch die Durchgangsbohrung 20 und die beiden Hülsen 41, 42 durchgesteckt ist. Der Durchgangsbolzen 5 ist als Schraube ausgebildet und weist an einem axialen Ende einen Bolzenkopf 53 und am anderen axialen Ende ein Außengewinde 54 auf, wobei sich das Außengewinde 54 nur über einen Teilbereich des Durchgangsbolzens 5 erstreckt.

Mittels des Außengewindes 54 ist der Durchgangsbolzen 5 in eine Mutter 51 an der zweiten Wand 32 eingeschraubt. Der Bolzenkopf 53 befindet sich dabei auf der Seite der ersten Wand 31, und liegt insbesondere an einer Außenseite der ersten Wand 31 an.

Bevorzugt ist zwischen dem Durchgangsbolzen 5 und einer inneren Durchgangsöffnung der Hülsen 41, 42 jeweils eine Spielpassung ausgebildet, um ein einfaches Durchstecken zu ermöglichen. An den Bereichen des Durchgangsbolzens 5 innerhalb jeder Hülse 41, 42 ist bevorzugt jeweils eine Dichtung, beispielsweise eine O-Ring-Dichtung 56, zwischen Durchgangsbolzen 5 und Hülse 41 bzw. 42 angeordnet, um einen Fluideintritt ins Innere der Hülsen 41, 42 und ins Innere der Durchgangsbohrung 20 zu vermeiden

Der Durchgangsbolzen 5 ist dabei derart eingeschraubt, dass dieser die beiden Hülsen 41, 42 in axialer Richtung des Durchgangsbolzens 5 gegen die zweite Wand 32 verspannt. Durch die Hülsen 41, 42 wird dabei sichergestellt, dass diese Verspannung zu keiner oder einer genau definierten Druckbelastung der Antriebseinheit 2 in axialer Richtung zwischen den Flanschen 44 der beiden Hülsen 41, 42 führt. Insbesondere wird durch die beiden Hülsen 41, 42 eine Zugbelastung der Antriebseinheit 2 vermieden.

Die spezielle Durchsteckverschraubung der Antriebsanordnung 1 bietet dabei zahlreiche Vorteile. Beispielsweise erlaubt die Verwendung des Durchgangsbolzens 5 eine besonders robuste Befestigung der Antriebseinheit 2. Insbesondere kann eine Verschraubung mit hohem Drehmoment erfolgen. Durch die Aufnahme hoher Druckkräfte mittels der Hülsen 41, 42 wird dabei eine unzulässig hohe mechanische Beanspruchung der Antriebseinheit 2 besonders zuverlässig vermieden. Zudem kann beispielsweise durch Anpassung der Hülsen 41, 42 einfach und kostengünstig eine Toleranzlage der Antriebsanordnung 1 definiert eingestellt werden. Ferner erlaubt die Durchsteckverschraubung eine besonders einfache Montage der Antriebsanordnung 1, da das Einstecken des Durchgangsbolzens 5 und eine Betätigung des Durchgangsbolzens 5 zum Einschrauben nur von einer Seite, nämlich von der Seite der ersten Wand 31, aus durchgeführt werden kann. Dies ist insbesondere vorteilhaft bei eingeschränkter Zugänglichkeit auf der Seite der zweiten Wand 32, beispielsweise, wenn sich auf dieser Seite ein Kettenblatt 106 (vergleiche Figur 1) befindet.

Zusätzlich umfasst jede Hülse 41, 42 ein Dämpfungselement 45, welches aus einem elastischen und schwingungsdämpfenden Material gebildet ist. Insbesondere ist das Dämpfungselement 45 aus einem Elastomer gebildet. Im Detail ist dabei jeweils eine radial äußere Außenseite des Schafts 43, des Flansches 44, sowie diejenige Seite des Flansches 44, welche zur Antriebseinheit 2 gewandt ist, mit dem Dämpfungselement 45 überdeckt bzw. überzogen. Vorzugsweise ist das Dämpfungselement 45 somit in Form einer Umspritzung der Hülse 41, 42 ausgebildet.

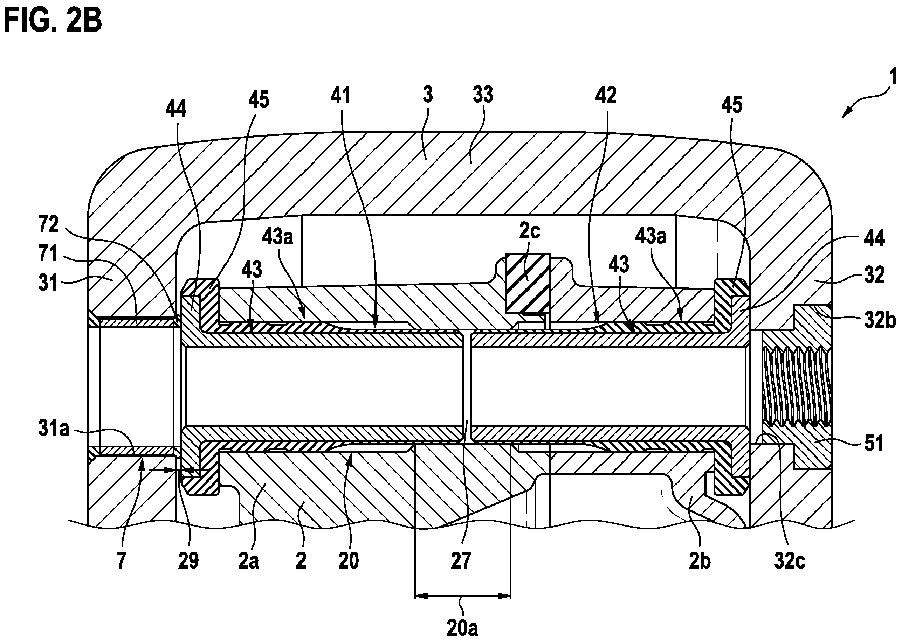

Ferner sind die axialen Längen der Schäfte 43 der Hülsen 41, 42 derart ausgebildet, dass im vollständig in die Durchgangsbohrung 20 eingestecktem und durch den Durchgangsbolzen 5 noch nicht verspanntem Zustand, wie dies in Figur 2B dargestellt ist, ein vordefinierter Axialabstand 27, das heißt ein Spalt, zwischen den beiden Hülsen 41, 42 im Inneren der Durchgangsbohrung 20 vorliegt. Betrachtet wird dabei ein Zustand, in welchem die beiden Hülsen 41, 42 unverspannt sind, jedoch das Dämpfungselement 45 im Bereich jedes Flansches 44 jeder Hülse 41, 42 an der Antriebseinheit 2 anliegt. Insbesondere sind hierbei die axialen Längen der beiden Schäfte 43 um eine vorbestimmte Differenz kleiner als die Hälfte der axialen Länge der Durchgangsbohrung 20, wobei die vorbestimmte Differenz kleiner als die doppelte Dicke von einem der Dämpfungselemente 45 im Bereich des Flansches 44 ist.

In dem in Figur 2A gezeigten vollständig verschraubtem Zustand liegt zwischen erster Wand 31 und erster Hülse 41 ein vordefinierter Spalt 29 vor.

Durch diese spezielle Abstimmung der Längen der beiden Hülsen 41, 42 und der Durchgangsbohrung 20 wird erreicht, dass jeweils der zwischen Flansch 44 und Antriebseinheit 2 liegende Teil des Dämpfungselements 45 jeder Hülse 41, 42 zwischen Flansch 44 und Antriebseinheit 2 durch die Verspannung mittels des Durchgangsbolzens 5 teilweise verpresst bzw. eingeklemmt und dadurch elastisch verformt wird.

Die Dämpfungselemente 45 und die entsprechende Auslegung der Hülsen 41, 42 mit Axialabstand in unverspanntem Zustand führt dazu, dass im verspannten Zustand eine geringfügige Druckbelastung auf die Antriebseinheit 2 ausgeübt wird. Dies kann sich vorteilhaft auf eine Dichtigkeit der Antriebseinheit 2 selbst auswirken. Zudem wird durch das elastische Verformen der Dämpfungselemente 45 eine besonders zuverlässige Abdichtung zwischen den Hülsen 41, 42 und der Antriebseinheit 2 ermöglicht.

In der Figur 1 ist zudem eine Abtriebswelle 108 dargestellt, welche mit einem Kettenblatt 106 drehfest verbunden ist. Die Abtriebswelle 108 ist dabei einerseits durch die Muskelkraft des Fahrers und andererseits durch die Motorkraft der Antriebseinheit 2 antreibbar. Das Kettenblatt 106 befindet sich dabei auf der Seite der zweiten Wand 32. Dadurch ergibt sich wie bereits oben erwähnt, die vorteilhafte Zugänglichkeit und vereinfachte Montage der Antriebsanordnung 1. Ferner ergibt sich dadurch der Vorteil einer direkten Kraftübertragung zwischen Abtriebswelle 108 und Rahmenschnittstelle 3, welche aufgrund der höheren mechanischen Kräfte auf der Kettenblatt-Seite durch die direkte und robuste Anbindung mittels der zweiten Wand 32 besonders gut aufgenommen werden können. Zudem wird dadurch eine definierte Lage des Kettenblatts 106 bezogen auf eine axiale Richtung der Abtriebswelle 108 und relativ zur Rahmenschnittstelle 3 sichergestellt, was den Vorteil einer zuverlässig präzise angeordneten Kettenlinie bringt.

Ferner ergibt sich durch die Verbindung von Antriebseinheit 2 und Rahmenschnittstelle 3 über die Dämpfungselemente 45 der Vorteil einer schwingungsentkoppelten Halterung der Antriebseinheit 2 am Fahrzeug 100. Neben einer Verhinderung oder Reduzierung einer Übertragung von akustischen Schwingungen, was sich vorteilhaft auf eine Reduzierung von Geräuschen beim Betrieb des Fahrzeugs 100 auswirkt, wird auch eine Übertragung mechanischer Schwingungen reduziert oder verhindert. Dadurch kann eine schädigende Wirkung derartiger Schwingungen auf die Verschraubung verhindert oder reduziert werden. Das heißt, ein Lockern oder Aufarbeiten der Verschraubung kann verhindert oder reduziert werden. Zudem kann durch die Elastizität des Dämpfungselements 45 selbst ein gewisser Toleranzausgleich, beispielsweise im Hinblick auf eine Koaxialität der Bohrungen oder Öffnungen oder dergleichen erfolgen.

Zusätzlich ist an der ersten Wand 31 eine axial bewegliche Halterung des Durchgangsbolzen 5 vorgesehen. Dabei befindet sich der Bolzenkopf 53 des Durchgangsbolzens 5 innerhalb einer Wandöffnung 31a der ersten Wand 31. Eine Verformung der ersten Wand 31 ist somit nicht vorgesehen, sondern es kann eine besonders steife und robuste Rahmenschnittstelle 3 bereitgestellt werden.

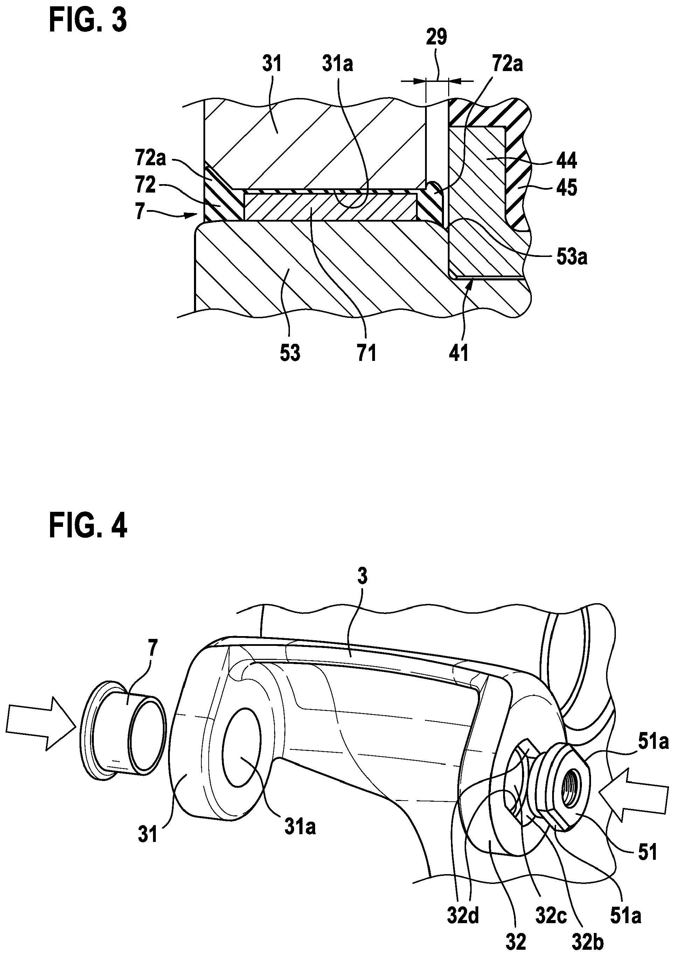

Die axial bewegliche Halterung wird mittels eines Toleranzausgleichselements 7 erreicht. Diese Halterung mit dem Toleranzausgleichselement 7 ist vergrößert in Figur 3 dargestellt. Das Toleranzausgleichselement 7 umfasst dabei eine hohlzylindrische Gleitlagerbuchse 71 und eine Dämpfungshülle 72. Die Dämpfungshülle 72 ist insbesondere aus einem elastischen Material, vorzugsweise einem Elastomer, ausgebildet. Die Dämpfungshülle 72 umgibt dabei im Wesentlichen vollständig eine radial äußere Seite der Gleitlagerbuchse 71, wobei beispielsweise auch (nicht dargestellte) Ausnehmungen in der Dämpfungshülle 72 vorgesehen sein können. Zusätzlich bedeckt die Dämpfungshülle beide axialen Stirnseiten der Gleitlagerbuchse 71 zumindest teilweise. An der radial inneren Seite liegt die Gleitlagerbuchse 71 frei, sodass der Bolzenkopf 53 sich leichtgängig mit geringer Reibung relativ zum Toleranzausgleichselement 7 bewegen kann.

Die Gleitlagerbuchse 71 kann bevorzugt entlang der Umfangsrichtung aus einem Vollmaterial gebildet sein, oder alternativ geschlitzt ausgebildet sein, das heißt mit einem Längsschlitz in Axialrichtung. In beiden Fällen ist die Gleitlagerbuchse 71 bevorzugt derart ausgebildet, dass durch das Einschrauben des Durchgangsbolzens 5 und somit durch das Eindringen des Bolzenkopfes 53 in die Gleitlagerbuchse 71 die Gleitlagerbuchse 71 in radialer Richtung aufgeweitet wird, sodass ein Presssitz zwischen Toleranzausgleichselement 7 und Wandöffnung 31a entsteht. Dadurch kann eine in radialer Richtung spielfreie Halterung des Bolzenkopfes 53 innerhalb der Wandöffnung 31a ermöglicht werden.

Der Spalt 29 zwischen erster Wand 31 und erster Hülse 41 liegt dabei sowohl im unverschraubtem, als auch im vollständig verschraubten Zustand vor (vgl. Figur 2A und 3).

Bevorzugt weist der Bolzenkopf 53 an einer der Hülse 41 zugewandten Seite eine Einführfase 53a (vergleiche Figur 3) auf, welche das Einschieben und Einschrauben des Durchgangsbolzens 5 erleichtert.

An den beiden axialen Enden weist die Dämpfungshülle 72 jeweils eine Dichtlippe 72a auf, welche als sowohl nach radial innen, als auch nach radial außen vorstehende Lippe ausgebildet ist. Durch die Elastizität der Dämpfungshülle 72 werden hierbei beim Einschrauben des Durchgangsbolzens 5 die Dichtlippen 72a durch den Bolzenkopf 53 nach radial außen gedrängt.

Dadurch ergibt sich eine zuverlässige und definierte Abdichtung zwischen erster Wand 31 und Toleranzausgleichselement 7 sowie zwischen Bolzenkopf 53 und Toleranzausgleichselement 7. Ferner bewirken die Dichtlippen 72a einen axialen Formschluss des Toleranzausgleichselements 7 mit der ersten Wand 31. Dadurch wird eine zuverlässige und definierte Anordnung des Toleranzausgleichselements 7 relativ zur ersten Wand 31 sichergestellt.

Das Toleranzausgleichselement 7 kann bevorzugt, wie in der Figur 4 dargestellt, vor dem Anordnen der Antriebseinheit 2 in die Wandöffnung 31a der ersten Wand 31 von außen, also von außerhalb der Rahmenschnittstelle 3, eingesteckt, insbesondere mittels eines geringfügigen Formschlusses durch die Dichtlippen 72a eingeclipst, werden.

Zusätzlich ist die Verschraubung des Durchgangsbolzens 5 im ersten Ausführungsbeispiel an der zweiten Wand 32 mittels einer Mutter 51 ausgebildet. Der Durchgangsbolzen 5 ist dabei in die Mutter 51 an der zweiten Wand 32 eingeschraubt. Die Mutter 51 kann bevorzugt, wie vorzugsweise auch der Durchgangsbolzen 5, aus Stahl gebildet sein, um eine besonders feste Verschraubung mit hohem Drehmoment zu ermöglichen.

Die Mutter 51 ist dabei verdrehsicher in einer Ausnehmung 32b der zweiten Wand 32 angeordnet. Die Ausnehmung 32b ist bevorzugt eine außenliegende radiale Erweiterung einer kreisrunden zweiten Wandöffnung 32c, die die zweite Wand 32 durchdringt. Wie in der Figur 4 zu erkennen, weist die Ausnehmung 32b zwei gegenüberliegende Abflachungen 32d, das heißt zwei in tangentialer Richtung angeordnete, gerade und parallele Wände, auf. Die Mutter 51 weist eine entsprechende Geometrie mit zwei gegenüberliegenden Abflachungen 51a auf. Die Abflachungen 32d, 51a bewirken dabei, dass sich die Mutter 51 in der zweiten Wand 32 nicht verdrehen kann, beispielsweise beim Einschrauben des Durchgangsbolzens 5, wodurch eine besonders einfache und schnelle Montage der Antriebsanordnung 1 ermöglicht wird.

Zudem ist die Mutter 51 in einer Schnittansicht T-förmig ausgebildet. Dadurch kann bei optimaler Kompaktheit des gesamten Antriebsanordnung 1 eine maximale Gewindelänge bereitgestellt werden, um eine feste und zuverlässige Verschraubung mit dem Durchgangsbolzen 5 zu ermöglichen.

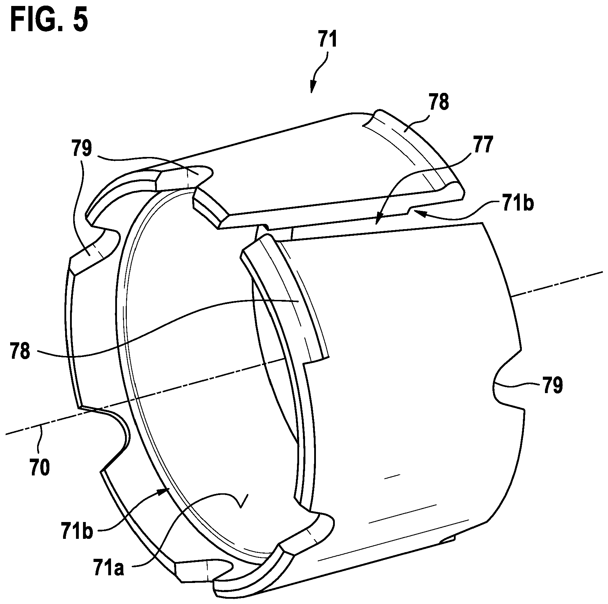

Figur 5 zeigt eine perspektivische Detailansicht eines Toleranzausgleichselements 7 einer Antriebsanordnung 1 gemäß einem zweiten Ausführungsbeispiel der Erfindung. Das zweite Ausführungsbeispiel entspricht im Wesentlichen dem ersten Ausführungsbeispiel der Figuren 1 bis 4, mit dem Unterschied, dass die Gleitlagerbuchse 71 des Toleranzausgleichselements 7 eine alternative Ausgestaltung aufweist. Die Gleitlagerbuchse 71 ist dabei in der perspektivischen Ansicht der Figur 5 dargestellt.

Die Gleitlagerbuchse 71 weist einen Längsschlitz 77 auf, der die im Wesentlichen hohlzylindrische Gleitlagerbuchse 71 in axialer Richtung und in radialer Richtung vollständig durchdringt. Der Längsschlitz 77 ist dabei in Bezug auf eine Längsachse 70 der Gleitlagerbuchse 71 schräg angeordnet, das heißt er erstreckt sich entlang einer Linie, die bei radialer Projektion auf eine Ebene der Längsachse 70 in einem Winkel von bevorzugt mindestens 5°, vorzugsweise maximal 45°, zur Längsachse 70 angeordnet ist. Dadurch kann eine optimale mechanische Abstützung um den gesamten Umfang der Gleitlagerbuchse 71 bereitgestellt werden, da beispielsweise keine oder nur eine geringfügige Unterbrechung der projizierten Auflagefläche zwischen Bolzenkopf 53 und erster Wand 31 vorliegt. Dies kann beispielsweise eine bessere koaxiale Positioniergenauigkeit der Antriebseinheit 2 relativ zur Rahmenschnittstelle 3 ermöglichen.

Die Gleitlagerbuchse 71 der Figur 5 weist zudem an jedem axialen Ende am Außenumfang jeweils eine Rastnase 78 auf. Die Rastnase 78 ist als von einem Außenumfang der Gleitlagerbuchse 71 vorstehendes Element ausgebildet und bewirkt einen stärkeren Formschluss mit der ersten Wand 31 (vergleiche hierzu auch Figur 3). Wie in der Figur 5 zu erkennen, grenzt jeweils eine der beiden dargestellten Rastnasen 78 unmittelbar an den Längsschlitz 77 an, wobei die beiden Rastnasen 78 bezüglich der Umfangsrichtung an gegenüberliegenden Seiten des Längsschlitzes 77 angeordnet sind. Jede der beiden Rastnasen 78 erstreckt sich nur über einen Teil des Umfangs der Gleitlagerbuchse 71. Es können bevorzugt noch weitere (nicht dargestellte) Rastnasen 78 um den Umfang der Gleitlagerbuchse 71 verteilt vorgesehen sein.

Die Gleitlagerbuchse 71 der Figur 5 weist außerdem an jedem axialen Ende um den Umfang verteilt mehrere Ausnehmungen 79 auf, welche im wesentlichen U-förmig ausgebildet sind, und die Gleitlagerbuchse 71 in radialer Richtung vollständig durchdringen. Mittels der Ausnehmungen 79 kann mehr Material des Dämpfungselements 72 zur Verfügung stehen, das die am Außenumfang der Gleitlagerbuchse 71 befindliche Schicht des Dämpfungselements 72 mit der radial inneren Schicht verbindet. Dadurch kann ein optimaler Verbund von Gleitlagerbuchse 71 und Dämpfungselement 72 hergestellt werden.

Weiter optimiert wird der Verbund von Gleitlagerbuchse 71 und Dämpfungselement 72 durch Absätze 71b am inneren Umfang der Gleitlagerbuchse 71. Die Absätze 71b sind dabei als Vergrößerungen des Innendurchmessers der Gleitlagerbuchse 71 ausgehend von der Gleitfläche 71a aus vorgesehen. Das heißt, in den Absätzen 71b, von welchen sich jeweils einer an einem axialen Ende der Gleitlagerbuchse 71 befindet, kann der radial innere Bereich des Dämpfungselements 72 angeordnet sein.

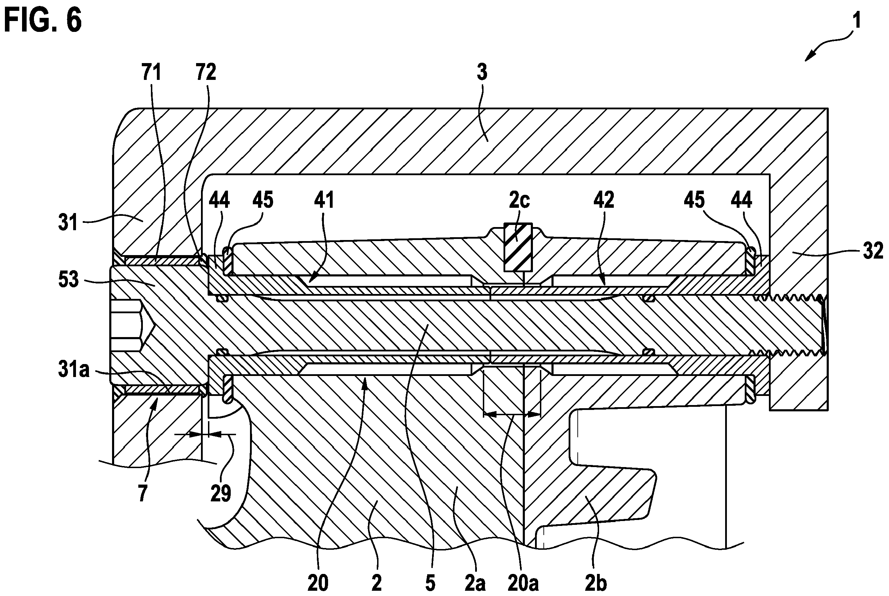

Figur 6 zeigt eine Schnittansicht einer Antriebsanordnung 1 gemäß einem dritten Ausführungsbeispiel der Erfindung. Das dritte Ausführungsbeispiel entspricht im Wesentlichen dem ersten Ausführungsbeispiel der Figuren 1 bis 4, mit dem Unterschied, dass das Dämpfungselement 45 nur am Flansch 44 der jeweiligen Hülse 41, 42 angeordnet ist. Das heißt, das Dämpfungselement 45 ist jeweils scheibenförmig ausgebildet und ausschließlich zwischen der der Antriebseinheit 2 zugewandten Seite des Flansches 44 und der Antriebseinheit 2 angeordnet.

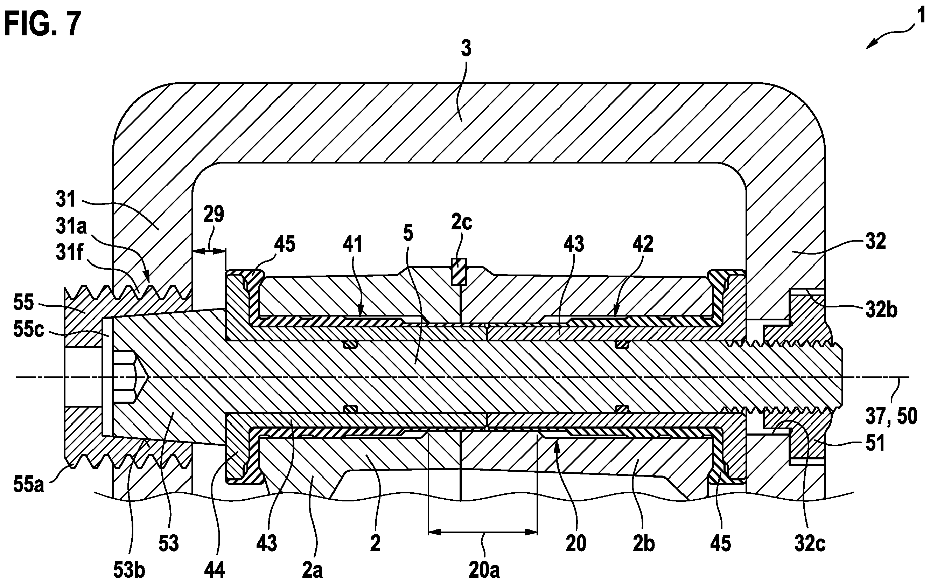

Figur 7 zeigt eine Schnittansicht einer Antriebsanordnung 1 gemäß einem vierten Ausführungsbeispiel der Erfindung. Das vierte Ausführungsbeispiel entspricht im Wesentlichen dem ersten Ausführungsbeispiel der Figuren 1 bis 4, mit dem Unterschied, dass anstatt eines Toleranzausgleichselements ein Halteelement 55 an der ersten Wand 31 vorgesehen ist. Das Halteelement 55 bewirkt im Unterschied zum Toleranzausgleichselement der Figuren 1 bis 4 eine axial unbewegliche Halterung des Bolzenkopfs 53. Zudem bewirkt das Halteelement 55 eine Fixierung des Bolzenkopfes 53 an der ersten Wand 31 in radialer Richtung komplett spielfrei.

Das Halteelement 55 ist dabei als eine in ein Innengewinde 31f der Wandöffnung 31a der ersten Wand 31 einschraubbare Mutter ausgebildet. Das Halteelement 55 weist eine Halteöffnung 55c auf, in der der Bolzenkopf 53 des Durchgangsbolzens 5 gehalten ist. Die Halteöffnung 55c ist dabei sich in Richtung der zweiten Wand 32 hin konisch aufweitend ausgebildet.

Zusätzlich weist der Bolzenkopf 53 eine der konischen Geometrie der Halteöffnung 55c entsprechende konische Mantelfläche 53b auf. Das heißt, der Bolzenkopf 53, im Detail dessen Mantelfläche 53b, ist sich in Richtung zur ersten Wand 31 hin verjüngend ausgebildet. Entsprechende Konuswinkel der Halteöffnung 55c und der Mantelfläche 53b sind identisch.

Bei der Montage der Antriebsanordnung 1 der Figur 7 wird dabei analog der Antriebsanordnung 1 der Figuren 1 bis 4 zunächst die Verspannung mit der zweiten Wand 32, das heißt die Verschraubung der Antriebseinheit 2 mittels des Durchgangsbolzens 5 mit der zweiten Wand 32, hergestellt. Anschließend kann die Verschraubung des Halteelements 55 erfolgen, so weit, bis eine zusätzliche Verspannung des Bolzenkopfes 53 in Richtung der zweiten Wand 32 erfolgt. Durch die konischen Flächen von Halteöffnung 55c und Mantelfläche 53b wird der Bolzenkopf 53 in radialer Richtung in der Wandöffnung 31a zentriert, sodass ein radiales Spiel auf Null reduziert wird. Insbesondere erfolgt somit eine exakte Ausrichtung einer Bolzenachse 50 koaxial zu einer Öffnungsachse 37, auf welcher die beiden Wandöffnungen 31a, 32c liegen.

Die Befestigung mittels Halteelement 55 bietet dabei den zusätzlichen Vorteil, dass auch hohe Toleranzen an der ersten Wand 31 auf einfache Weise und effektiv ausgeglichen werden können.

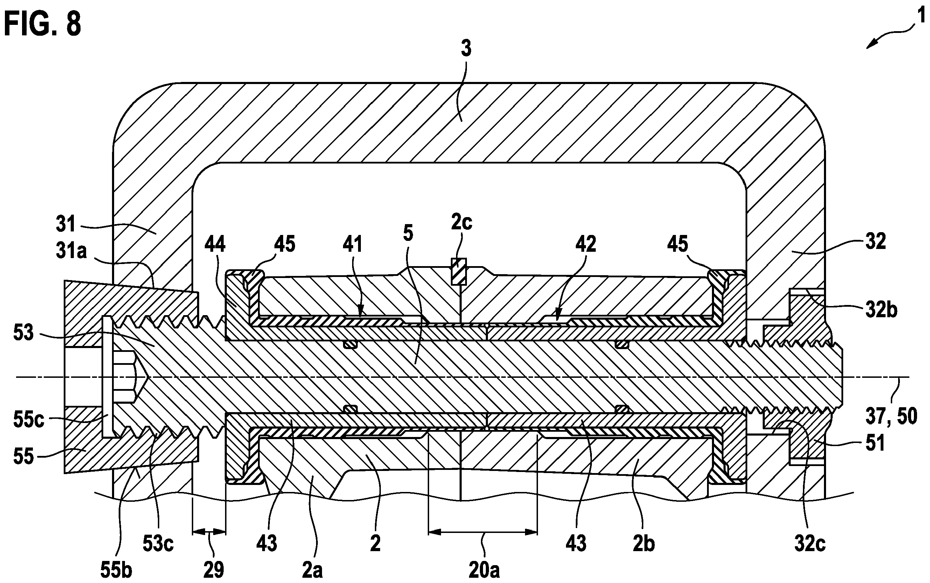

Figur 8 zeigt eine Schnittansicht einer Antriebsanordnung 1 gemäß einem fünften Ausführungsbeispiel der Erfindung. Das fünfte Ausführungsbeispiel entspricht im Wesentlichen dem vierten Ausführungsbeispiel der Figur 7, mit dem Unterschied einer alternativen Ausgestaltung von Halteelement 55 und Bolzenkopf 53. Beim fünften Ausführungsbeispiel der Figur 8 ist die Verschraubung mittels Innengewinde und Außengewinde 53c zwischen Bolzenkopf 53 und Halteelement 55 vorgesehen. Im Detail ist das Halteelement 55 auf ein Außengewinde 53 des Bolzenkopfes 53 aufgeschraubt.

Weiterhin ist im fünften Ausführungsbeispiel der Figur 8 eine äußere Mantelfläche 55b des Halteelements 55 sich in Richtung zur zweiten Wand 32 hin konisch verjüngend ausgebildet. Zudem ist eine innere Mantelfläche der Wandöffnung 31a sich in Richtung zur zweiten Wand 32 hin konisch verjüngend ausgebildet. Konuswinkel der beiden Mantelflächen sind dabei identisch. Dadurch ergibt sich im Wesentlichen derselbe Effekt der radialen Zentrierung des Bolzenkopfes 53 zur Wandöffnung 31a wie im vierten Ausführungsbeispiel der Figur 7, mit dem Unterschied, dass zusätzlich das mit dem Bolzenkopf 53 verschraubte Halteelement 55 ebenfalls zentriert wird. Im Unterschied zum vierten Ausführungsbeispiel der Figur 7 erfolgt im fünften Ausführungsbeispiel zudem eine entgegengesetzte Krafteinleitung auf den Durchgangsbolzen 5 durch die Zentrierung mittels des Halteelements 5.

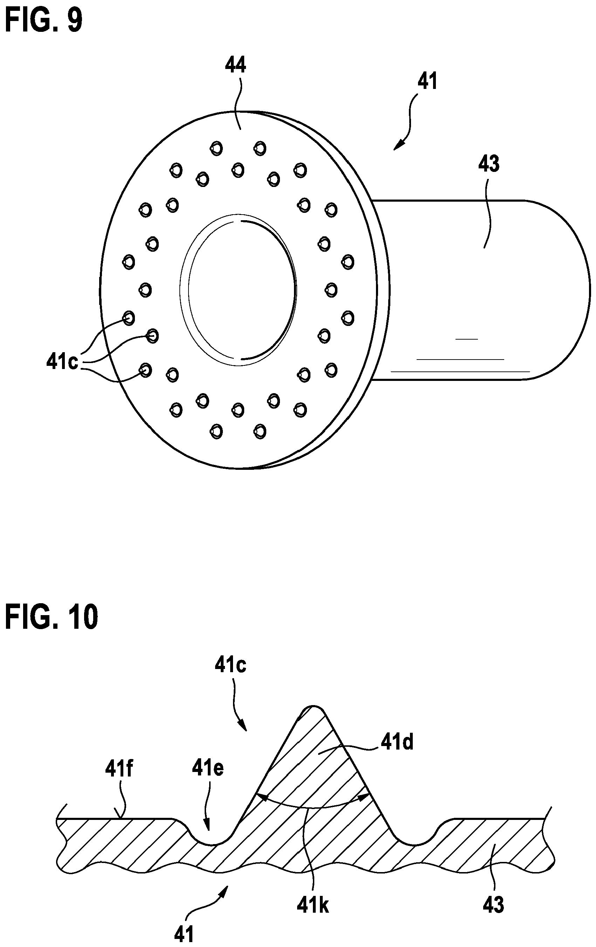

Figur 9 zeigt ein Detail einer Antriebsanordnung 1 gemäß einem sechsten Ausführungsbeispiel der Erfindung. Das sechste Ausführungsbeispiel entspricht im Wesentlichen dem ersten Ausführungsbeispiel der Figuren 1 bis 4, mit dem Unterschied einer alternativen Hülse 41, 42.

Dargestellt ist in der Figur 9 nur eine der beiden Hülsen 41, 42, wobei die beiden Hülsen 41, 42 bevorzugt identisch ausgebildet sind. Die Hülse 41 ist in perspektivischer Ansicht in der Figur 10 dargestellt.

Die Hülse 41 umfasst einen Schaft 43 und einen Flansch 44. Der Schaft 43 ist in die Durchgangsbohrung 20 der Antriebseinheit 2 eingesteckt. Der Flansch 44 ist vorgesehen zur Anlage an einer Innenseite der zweiten Wand 32 der Rahmenschnittstelle 3 (vgl. z.B. Figur 2A). Der Flansch 44 der Hülse 41 weist an derjenigen Seite, die der Wand 32 zugeordnet ist, eine Vielzahl an vorstehenden Formschlusselementen 41c auf. Bevorzugt sind die Formschlusselemente 41c in einem oder mehreren, wie in der Figur 9 dargestellt bevorzugt zwei, zur Durchgangsöffnung der Hülse 41 konzentrischen Kreisen angeordnet.

Ein einzelnes Formschlusselement 41c der Hülse 41 der Figur 9 ist in einer Detail-Schnittansicht in der Figur 10 dargestellt. Jedes Formschlusselement 41c weist eine von einer Oberfläche 41f des Flansches 44 vorstehende Pyramide 41d auf. Alternativ bevorzugt kann jedes Formschlusselement 41c auch einen vorstehenden Kegel aufweisen. Die Pyramide 41d ist als gerade Pyramide ausgebildet und weist einen Öffnungswinkel 41k von vorzugsweise weniger als 60° auf. Die Pyramiden 41d bewirken dabei, dass sich diese beim Verschrauben der Hülse 41 mit der Wand 32 in die Oberfläche der Wand 32 eindrücken, also die Oberfläche plastisch verformen. Dadurch wird ein Mikro-Formschluss zwischen Hülse 41 und Wand 32 in einer zur Schraubenachse senkrechten Ebene erzeugt, wodurch eine besonders feste Verbindung von Antriebseinheit 2 und Rahmenschnittstelle 3 miteinander ermöglicht werden kann. Ein Rutschen der Antriebseinheit 2 relativ zur Rahmenschnittstelle 3 kann damit zuverlässig verhindert werden.

Jedes Formschlusselement 41c weist dabei zusätzlich zu der Pyramide 41d, jeweils eine Vertiefung 41e auf, die an einem Außenumfang der Pyramide 41d und in der Oberfläche 41f des Flansches 44 ausgebildet ist. Die Vertiefung 41e kann beispielsweise durch das Eindringen der Pyramide 41d in die Wand 32 verdrängtes Material der Wand 32 aufnehmen, sodass Wand 32 und Flansch 44 zuverlässig präzise plan aufeinander aufliegen können. Beispielsweise kann pro Pyramide 41d jeweils eine separate Vertiefung 51e vorgesehen sein, die die Pyramide 41d teilweise oder vollständig umgibt. Alternativ bevorzugt kann eine einzelne Vertiefung 41e in der Oberfläche 41f des Flansches 44 ausgebildet sein, an deren radialer Innenseite und/oder Außenseite die Pyramiden 41d angeordnet sind.

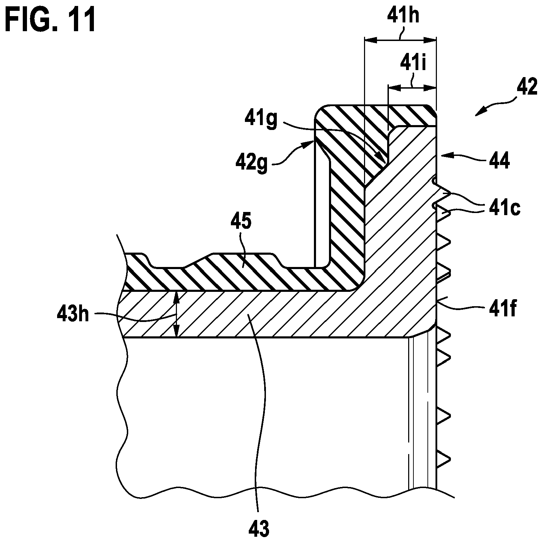

Figur 11 zeigt eine Detail-Schnittansicht einer Antriebsanordnung 1 gemäß einem siebten Ausführungsbeispiel der Erfindung. Dargestellt ist in der Figur 11 dabei nur eine der Hülsen 41, 42 nämlich die Hülsen 42 an der Seite der zweiten Wand 32. Bevorzugt ist die erste Hülsen 41 an der ersten Wand 31 identisch ausgebildet. Das siebte Ausführungsbeispiel entspricht im Wesentlichen dem ersten Ausführungsbeispiel der Figuren 1 bis 4, mit dem Unterschied einer alternativen Ausgestaltung der Hülse 42 im Bereich des Flansches 44. Dabei weist die Hülse 42 an einem radial äußeren Ende des Flansches 44 eine Verjüngung 41g auf der dem Schaft 43 zugewandten Seite des Flansches 44 auf. Die Verjüngung 41g ist dabei derart ausgebildet, dass eine Differenz der maximalen Dicke 41h und einer minimalen Dicke 41i des Flansches 44 mindestens 50 %, bevorzugt maximal 150 %, einer Wandstärke 43h des Schafts 43 der Hülse 42 entspricht. Die Dicken werden dabei entlang einer Richtung parallel zur einer Längsachse der Hülse 42 betrachtet.

Das Dämpfungselement 45 ist dabei derart ausgebildet, dass dieses die Verjüngung 41g des Flansches 44 kompensiert. Zusätzlich weist das Dämpfungselement 45 an einem radial äußersten Ende eine Verdickung 42g auf. Dadurch liegt am radial äußeren Ende des Flansches 44 ein besonders dickes Dämpfungselement 42 vor. Dies wirkt sich vorteilhaft auf eine optimale Abdichtung zwischen Hülse 42 und Antriebseinheit 2 aus.

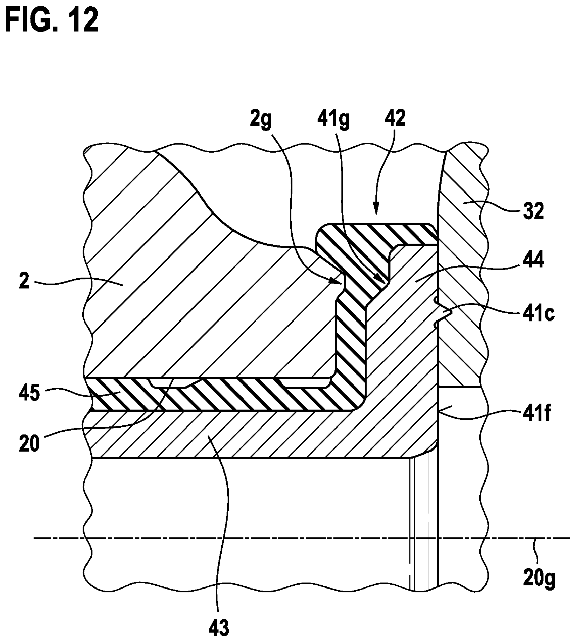

Weiter unterstützt wird diese Abdichtung durch eine vorstehende Ringrippe 2g der Antriebseinheit 2, welche im siebten Ausführungsbeispiel, wie in der Figur 12 dargestellt, vorgesehen ist. Die vorstehende Ringrippe 2g weist einen trapezförmigen Querschnitt auf und ist konzentrisch zur Durchgangsbohrung 20 der Antriebseinheit 2 angeordnet. Im eingepressten Zustand der Hülse 42 in die Durchgangsbohrung 20 liegen dabei die vorstehende Ringrippe 2g und die Verjüngung 41g der Hülse 42 auf demselben Radius bezüglich der Bohrungsachse 20g der Durchgangsbohrung 20. Dadurch taucht die vorstehende Ringrippe 2g in die weiche Zone des Dämpfungselements 45 im Bereich der Verjüngung 41g ein, wenn Hülse 42 und Antriebseinheit 2 im vollständig verschraubten Zustand gegeneinander gepresst sind. Durch die Elastizität des Dämpfungselements 45 kann somit optimal an der Antriebseinheit 2 abgedichtet werden.

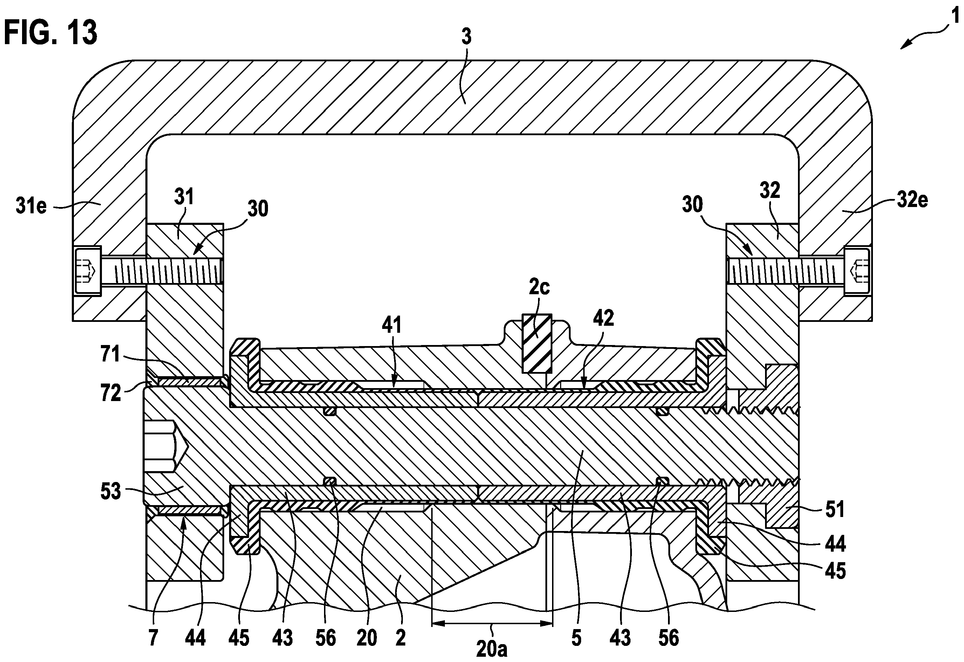

Figur 13 zeigt eine Schnittansicht einer Antriebsanordnung 1 gemäß einem achten Ausführungsbeispiel der Erfindung. Das achte Ausführungsbeispiel entspricht im Wesentlichen dem ersten Ausführungsbeispiel der Figuren 1 bis 4, mit dem Unterschied, dass die Antriebseinheit 2 indirekt mit der Rahmenschnittstelle 3 verschraubt ist. Im Detail sind hierbei die beiden Wände 31, 32, mit denen die Antriebseinheit 2 verschraubt ist, als separate Bauteile zur Rahmenschnittstelle 3 ausgebildet. Beispielsweise können die Wände 31, 32 als Haltebleche ausgebildet sein. Die Wände 31, 32 können dabei mittels zusätzlicher Schraubenverbindungen 30 und/oder (nicht dargestellter) Schweißverbindungen mit Rahmenwänden 31e, 32e der Rahmenschnittstelle 3 verbunden sein. Dadurch kann eine besonders hohe Flexibilität der Antriebsanordnung 1 bereitgestellt werden.

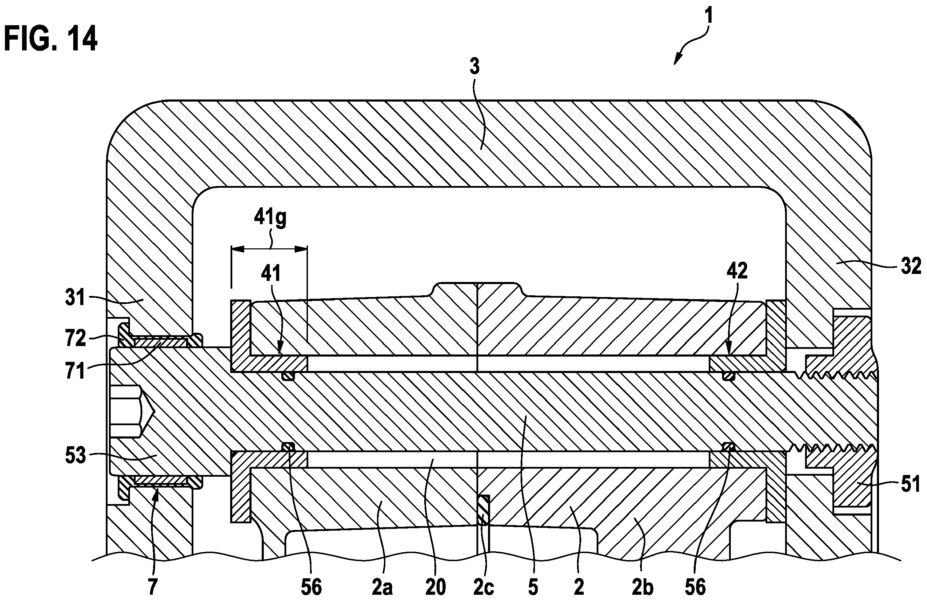

Figur 14 zeigt eine Schnittansicht einer Antriebsanordnung 1 gemäß einem neunten Ausführungsbeispiel der Erfindung. Das neunte Ausführungsbeispiel entspricht im Wesentlichen dem ersten Ausführungsbeispiel der Figuren 1 bis 4, mit dem Unterschied einer alternativen Ausgestaltung der Hülsen 41, 42. Im neunten Ausführungsbeispiel der Figur 14 sind die beiden Hülsen 41, 42 als besonders einfach und kostengünstig herstellbare verkürzte Metallhülsen ausgebildet. Dabei sind die Hülsen 41, 42 derart ausgebildet, dass diese sich nicht innerhalb der Durchgangsbohrung 20 berühren. Zudem weisen die beiden Hülsen 41, 42 eine kurze axiale Länge 41g auf, welche beispielsweise kleiner ist als ein Innendurchmesser der Durchgangsbohrung 20. Dadurch kann Material eingespart werden und zudem ein einfaches Einpressen der Hülsen 41, 42 in die Durchgangsbohrung 20 ermöglicht werden, da nur eine geringe Presslänge vorliegt. Somit ermöglicht die Antriebsanordnung 1 des neunten Ausführungsbeispiels eine besonders einfache und kostengünstige Konstruktion.

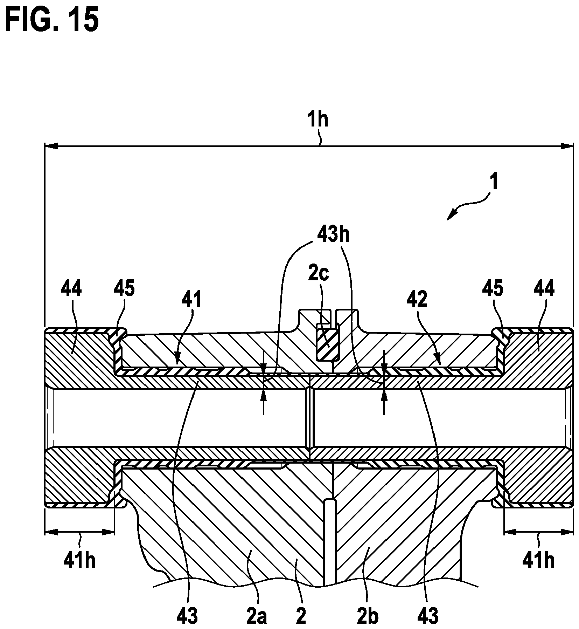

Figur 15 zeigt eine Schnittansicht einer Antriebsanordnung 1 gemäß einem zehnten Ausführungsbeispiel der Erfindung. Das zehnte Ausführungsbeispiel entspricht im Wesentlichen dem siebten Ausführungsbeispiel der Figuren 11 und 12, mit dem Unterschied, dass alternative Hülsen 41, 42 verwendet werden. Im Detail sind die Flansche 44 der Hülsen 41, 42 im zehnten Ausführungsbeispiel der Figur 15 dicker ausgeführt als im siebten Ausführungsbeispiel. Im Detail beträgt die Dicke 41h der Flansche 44 im zehnten Ausführungsbeispiel ein Vielfaches, bevorzugt mindestens das dreifache, einer Wandstärke 43h des entsprechenden Schafts 43 der jeweiligen Hülse 41, 42. Dadurch kann eine Gesamtbreite 1h der Antriebsanordnung 1 größer ausgestaltet werden im Vergleich zum siebten Ausführungsbeispiel, in welchem die Dicke 41h des Flansches 44 beispielsweise in etwa gleich der Wandstärke 43h des Schafts 43 ist. Das zehnte Ausführungsbeispiel der Figur 15 verdeutlicht somit, dass durch Veränderungen der Hülsen 41, 42 eine Anpassung der Antriebsanordnung 1 an verschiedene Fahrzeuge 100 besonders einfach und kostengünstig möglich ist.

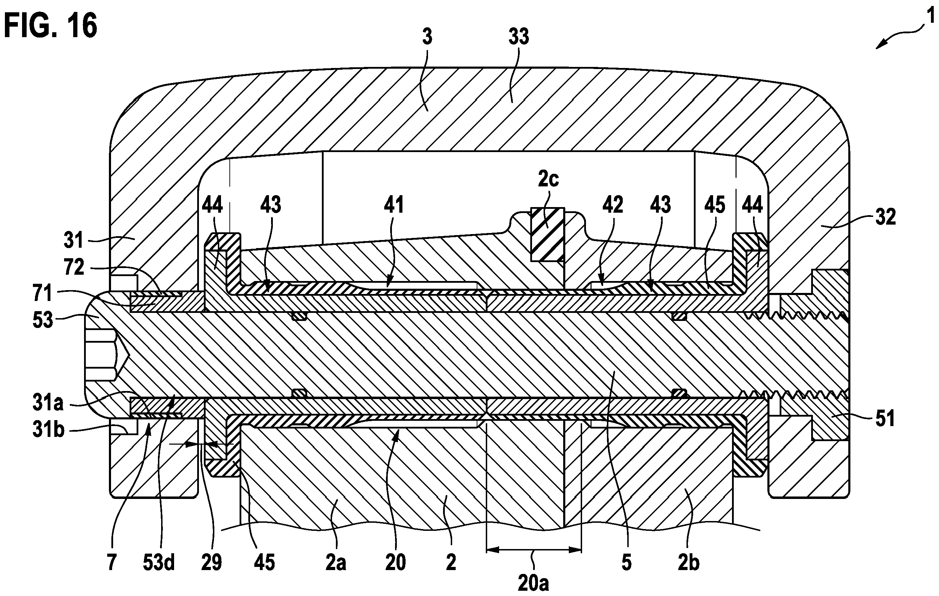

Figur 16 zeigt eine Schnittansicht einer Antriebsanordnung 1 gemäß einem elften Ausführungsbeispiel der Erfindung. Das elfte Ausführungsbeispiel entspricht im Wesentlichen dem ersten Ausführungsbeispiel der Figuren 1 bis 4, mit dem Unterschied einer alternativen Ausgestaltung der Loslagerung an der ersten Wand 31. Im elften Ausführungsbeispiel der Figur 16 sind der Durchgangsbolzen 5 und das Toleranzausgleichselement 7 gemeinsam axial beweglich relativ zur ersten Wand 31 gelagert. Dabei ist im Unterschied zum ersten Ausführungsbeispiel nicht der Bolzenkopf 53, sondern ein Bolzenschaft 53d des Durchgangsbolzens 5 innerhalb des Toleranzausgleichselements 7 angeordnet. Im elften Ausführungsbeispiel verspannt der Durchgangsbolzen 5 dabei zusätzlich das Toleranzausgleichselement 7 gegen die erste Hülse 41. Somit können Durchgangsbolzen 5 und Toleranzausgleichselement 7 gemeinsam in der Wandöffnung 31a der ersten Wand 31 gleiten. Die Wandöffnung 31a weist zudem einen vergrößerten Durchmesser 31b an der Außenseite auf, sodass der Bolzenkopf 53 teilweise innerhalb der Wandöffnung 31a angeordnet sein kann. Alternativ bevorzugt kann der Bolzenkopf 53 auch vollständig außerhalb der Wandöffnung 31a angeordnet sein.

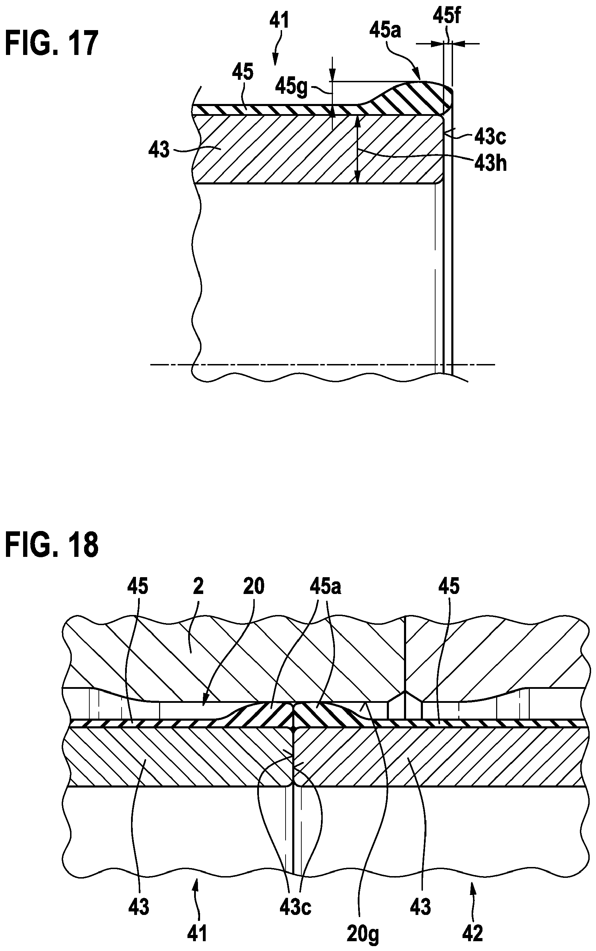

Figur 17 zeigt eine Detail-Schnittansicht einer Antriebsanordnung 1 gemäß einem zwölften Ausführungsbeispiel der Erfindung. Das zwölfte Ausführungsbeispiel entspricht im Wesentlichen dem siebten Ausführungsbeispiel der Figuren 11 und 12, mit dem Unterschied einer alternativen Ausgestaltung des Dämpfungselements 45. Beim zwöflten Ausführungsbeispiel der Figur 17 weist das Dämpfungselement 45 an einem dem Flansch 44 gegenüberliegenden axialen Ende der Hülse 41 einen Dichtwulst 45a auf. Der Dichtwulst 45a steht in axialer Richtung über eine Stirnseite 43c des Schafts 43 der Hülse 41 über. Zudem steht der Dichtwulst 45a in radialer Richtung nach außen von dem Dämpfungselement 45 vor.

Der axiale Überstand 45f des Dichtwulst 45a beträgt dabei bevorzugt mindestens 20 % der Wandstärke 43h des Schafts 43. Zudem beträgt der radiale Überstand 45g vorzugsweise mindestens 30 % der Wandstärke 43h des Schafts 43.

Der Dichtwulst 45a an den Dämpfungselementen 45 der Hülsen 41, 42 bewirkt dabei eine besonders zuverlässige Abdichtung gegenüber einem Fluideintritt. Dies wird durch eine sowohl axiale als auch radiale Verpressung jedes Dichtwulstes 45a erreicht, wie in Figur 18 dargestellt. Durch das Verspannen der Hülsen 41, 42 in axialer Richtung gegeneinander, werden die beiden Dichtwulste 45a axial gegeneinander verpresst. Beispielsweise kann zusätzlich durch ein radiales Übermaß der Dichtwulste 45a gegenüber einem Innenumfang 20g der Durchgangsbohrung 20 jeder Dichtwulst 45a zusätzlich mit dem Innenumfang 20g der Durchgangsbohrung 20 in radialer Richtung verpresst werden. Somit ergibt sich in der Ebene der sich berührenden Stirnseiten 43c der Hülsen 41, 42 radial außerhalb der Schäfte 43 der Hülsen 41, 42 eine zuverlässige Abdichtung mittels der Dichtwulste 45a.

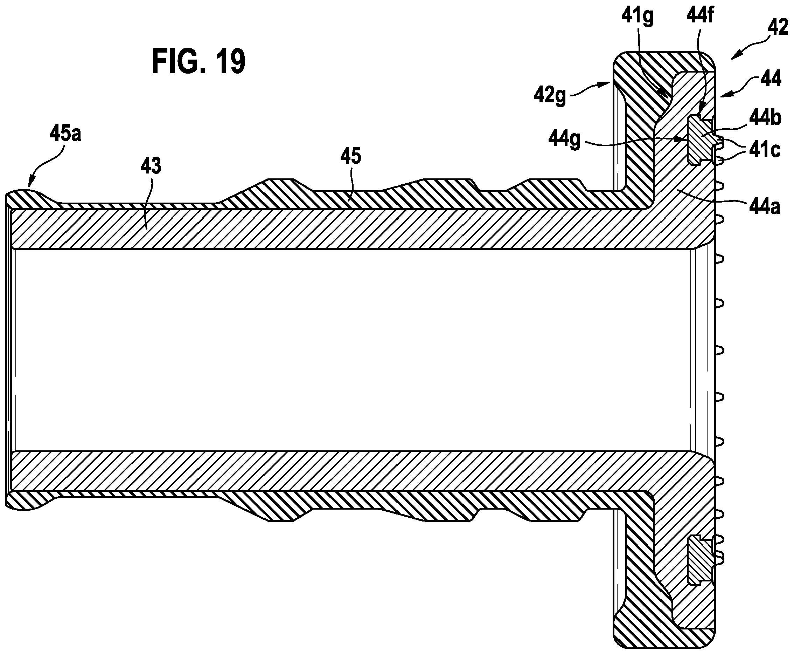

Figur 19 zeigt eine Detail-Schnittansicht einer Antriebsanordnung 1 gemäß einem dreizehnten Ausführungsbeispiel der Erfindung. Das dreizehnte Ausführungsbeispiel entspricht im Wesentlichen dem zwölften Ausführungsbeispiel der Figuren 17 und 18, mit dem Unterschied einer alternativen Ausgestaltung des Flansches 44 der Hülsen 41, 42. Im dreizehnten Ausführungsbeispiel der Figur 19 ist der Flansch 44 der Hülse 42 zweiteilig ausgebildet und umfasst einen Flansch-Grundkörper 44a und einen Einlegering 44b. Der Flansch-Grundkörper 44a ist gemeinsam mit dem Schaft 43 der Hülse 42 als ein einstückiges Bauteil ausgebildet. Der Einlegering 44a ist konzentrisch zu Hülsenöffnung der Hülse 42 ausgebildet und in einer Nut 44g des Flansch-Grundkörpers 44a angeordnet. Dabei wird der Einlegering 44b mittels eines axialen Formschlusses 44f in der Nut 44g gehalten. Der axiale Formschluss 44f kann beispielsweise durch Verstemmen, das heißt Umformen, von Teilbereichen des Flansch-Grundkörpers 44a hergestellt sein. Die Formschlusselemente 41c sind dabei im dreizehnten Ausführungsbeispiel ausschließlich auf dem Einlegering 44a angeordnet und als ein Teil von diesem ausgebildet.

Der Einlegering 44b ist dabei aus einem gehärteten Stahl ausgebildet, der eine signifikant höhere Härte als das Material von Flansch-Grundkörper 44a und Schaft 43 aufweist. Damit kann eine besonders hohe Robustheit und damit dauerhaft zuverlässige Funktion der Formschlusselemente 41c sichergestellt werden. Zudem wird durch die zweiteilige Ausgestaltung des Flansches 44 ermöglicht, dass Flansch-Grundkörper 44a und Schaft 43 aus einem Stahl gebildet werden, der sich gut für eine Kaltumformung eignet. Dadurch können die Hülsen 41, 42 auf besonders einfache und kostengünstige Weise hergestellt werden.

## Patentansprüche

1. Antriebsanordnung eines mit Muskelkraft und/oder Motokraft betreibbaren Fahrzeugs (100), umfassend:
- eine Antriebseinheit (2),
- eine Rahmenschnittstelle (3),
- wobei die Antriebseinheit (2) zumindest teilweise zwischen einer ersten Wand (31) und einer zweiten Wand (32) der Rahmenschnittstelle (3) angeordnet ist,
- wobei die Antriebseinheit (2) eine Durchgangsbohrung (20) aufweist,
- zwei Hülsen (41, 42) die beidseitig in die Durchgangsbohrung (20) der Antriebseinheit (2) eingesteckt sind, und
- einen Durchgangsbolzen (5), der durch die Durchgangsbohrung (20) und die beiden Hülsen (41, 42) durchgesteckt ist und die Antriebseinheit (2) an jeder der beiden Wände (31, 32) hält.

2. Antriebsanordnung nach Anspruch 1,
- wobei die beiden Hülsen (41, 42) sich innerhalb der Durchgangsbohrung (20) berühren, und
- wobei der Durchgangsbolzen (5) die beiden Hülsen (41, 42) gegeneinander verspannt.

3. Antriebsanordnung nach einem der vorhergehenden Ansprüche,
- wobei jede Hülse (41, 42) einen Schaft (43) und einen Flansch (44) aufweist,
- wobei der Schaft (43) zumindest teilweise innerhalb der Durchgangsbohrung (20) angeordnet ist, und
- wobei der Flansch (44) außerhalb der Durchgangsbohrung (20) angeordnet ist.

4. Antriebsanordnung nach Anspruch 3,
- wobei jede Hülse (41, 42) ein Dämpfungselement (45) aufweist, welches an einer der Antriebseinheit (2) zugewandten Seite des Flansches (44) angeordnet ist, und
- wobei das Dämpfungselement (45) aus einem schwingungsdämpfenden Material gebildet ist.

5. Antriebsanordnung nach Anspruch 4, wobei das Dämpfungselement (45) zusätzlich den Schaft (43) zumindest teilweise umgibt.

6. Antriebsanordnung nach Anspruch 5, wobei das Dämpfungselement (45) an einem dem Flansch (44) gegenüberliegenden axialen Ende einen axial und radial vom Schaft (43) vorstehenden Dichtwulst (45a) aufweist.

7. Antriebsanordnung nach Anspruch 6, wobei der Dichtwulst (45a) in axialer Richtung über eine Stirnseite (43c) des Schafts (43) der Hülse (41, 42) übersteht.

8. Antriebsanordnung nach einem der vorhergehenden Ansprüche, wobei die beiden Hülsen (41, 42) so ausgelegt sind, dass in vollständig in die Durchgangsbohrung (20) eingeschobenem Zustand und in unverspanntem Zustand zwischen den beiden Hülsen (41, 42) innerhalb der Durchgangsbohrung (20) ein vordefinierter Axialabstand (27) vorliegt.

9. Antriebsanordnung nach Anspruch 8, wobei der vordefinierte Axialabstand (27) so ausgelegt ist, dass im verspannten Zustand der Axialabstand (27) durch die Verspannung der beiden Hülsen (41, 42) mittels des Durchgangsbolzen (5) und durch elastische Verformung des Dämpfungselements (45) kompensiert ist.

10. Antriebsanordnung nach einem der Ansprüche 3 bis 9,
- wobei der Flansch (44) von zumindest einer Hülse (41, 42) an einer der entsprechenden Wand (31, 32) zugewandten Seite eine Vielzahl an vorstehenden Formschlusselementen (41c) aufweist, und
- wobei die Formschlusselemente (41c) so ausgebildet sind, um sich durch die Verschraubung mit der entsprechenden Wand (31, 32) in die Wand (31, 32) einzudrücken.

11. Antriebsanordnung nach Anspruch 10,
- wobei der Flansch (44) zweiteilig ausgebildet ist und einen Flansch-Grundkörper (44a) und einen Einlegering (44b) umfasst,
- wobei der Flansch-Grundkörper (44a) zusammen mit dem Schaft (43) als ein einstückiges Bauteil ausgebildet ist, und
- wobei die Formschlusselemente (41c) am Einlegering (44b) angeordnet sind.

12. Antriebsanordnung nach Anspruch 11, wobei der Einlegering (44b) in einer Nut (44c) des Flansch-Grundkörpers (44a) angeordnet ist, und insbesondere wobei der Einlegering (44b) mittels eines axialen Formschlusses in der Nut (44c) gehalten ist.

13. Antriebsanordnung nach einem der Ansprüche 11 oder 12, wobei der Flansch-Grundkörper (44a) und der Einlegering (44b) aus unterschiedlichen Materialien gebildet sind, insbesondere wobei der Einlegering (44 b) eine größere Härte als der Flansch-Grundkörper (44 a) aufweist.

14. Antriebsanordnung nach einem der Ansprüche 10 bis 13, wobei jedes Formschlusselement (41c) eine von einer Oberfläche (41f) des Flansches (44) vorstehende Pyramide (41d) oder einen Kegel aufweist.

15. Antriebsanordnung nach Anspruch 14, wobei jedes Formschlusselement (41c) eine an die Pyramide (41d) angrenzende Vertiefung (41e) in der Oberfläche (41f) des Flansches (44) aufweist.

16. Antriebsanordnung nach einem der Ansprüche 3 bis 15,
- wobei der Flansch (44) von zumindest einer Hülse (41, 42) an einem radial äußeren Ende und auf der dem Schaft (43) zugewandten Seite eine Verjüngung (41g) aufweist, und
- wobei die Verjüngung (41g) durch das Dämpfungselement (45) kompensiert ist.

17. Antriebsanordnung nach Anspruch 16,
- wobei die Antriebseinheit (2) zumindest eine vorstehende Ringrippe (2g) aufweist, welche konzentrisch zu einer der Öffnungen (20a, 20b) angeordnet ist,
- insbesondere wobei die vorstehende Ringrippe (2g) und die Verjüngung (41g) des Flansches (44) der Hülse (41) auf demselben Radius bezüglich einer Bohrungsachse (20g) der Durchgangsbohrung (20) angeordnet sind.

18. Antriebsanordnung nach einem der vorhergehenden Ansprüche,
- wobei der Durchgangsbolzen (5) an der zweiten Wand (32) befestigt ist, und
- wobei der Durchgangsbolzen (5) an der ersten Wand (31) axial beweglich gehalten ist.

19. Antriebsanordnung nach Anspruch 18, ferner umfassend ein Toleranzausgleichselement (7),
- wobei die erste Wand (31) eine erste Wandöffnung (31a) aufweist,
- wobei das Toleranzausgleichselement (7) hülsenförmig ausgebildet und innerhalb der ersten Wandöffnung (31a) angeordnet ist, und
- wobei ein Bolzenkopf (53) oder ein Bolzenschaft (53d) des Durchgangsbolzens (5) innerhalb des Toleranzausgleichselements (7) angeordnet ist.

20. Antriebsanordnung nach Anspruch 19, wobei das Toleranzausgleichselement (7) eine Gleitlagerbuchse (71) und eine Dämpfungshülle (72), welche die Gleitlagerbuchse (71) umgibt, aufweist.

21. Antriebsanordnung nach Anspruch 20, wobei Gleitlagerbuchse (71) und Bolzenkopf (53) so ausgelegt sind, dass der Bolzenkopf (53) die Gleitlagerbuchse (71) in radialer Richtung aufweitet, wenn der Bolzenkopf (53) innerhalb des Toleranzausgleichselements (7) angeordnet ist.

22. Antriebsanordnung nach Anspruch 21, wobei die Gleitlagerbuchse (71) geschlitzt ausgebildet ist.

23. Antriebsanordnung nach Anspruch 22, wobei der Schlitz (77) der Gleitlagerbuchse (71) schräg bezüglich einer Axialrichtung der Gleitlagerbuchse (71) ausgebildet ist.

24. Antriebsanordnung nach einem der Ansprüche 20 bis 23,
- wobei die Dämpfungshülle (72) mindestens eine Dichtlippe (72a) an einer radialen Außenseite aufweist, und
- wobei die mindestens eine Dichtlippe (72a) so ausgebildet ist, dass ein axialer Formschluss zwischen Dämpfungshülle (72) und erster Wand (31) vorliegt, wenn das Toleranzausgleichselement (7) in der ersten Wandöffnung (31a) angeordnet ist.

25. Antriebsanordnung nach Anspruch 24, wobei die Dämpfungshülle (72) so ausgebildet ist, dass die mindestens eine Dichtlippe (72a) nach radial außen gedrängt wird, wenn der Bolzenkopf (53) des Durchgangsbolzens (5) innerhalb des Toleranzausgleichselements (7) angeordnet ist.

26. Antriebsanordnung nach einem der Ansprüche 20 bis 25, wobei die Gleitlagerbuchse (71) an zumindest einem axialen Ende eine radial nach außen vorstehende Rastnase (78) aufweist.

27. Antriebsanordnung nach einem der Ansprüche 1 bis 17,
- wobei der Durchgangsbolzen (5) an der zweiten Wand (32) befestigt ist,
- wobei der Durchgangsbolzen (5) die beiden Hülsen (41, 42) und die zweite Wand (32) gegeneinander verspannt,
- wobei der Durchgangsbolzen (5) an der ersten Wand (31) mittels eines Halteelements (55) gehalten ist, und
- wobei das Halteelement (55) den Durchgangsbolzen (5) an der ersten Wand (31) in radialer Richtung fixiert.

28. Antriebsanordnung nach Anspruch 27,
- wobei das Halteelement (55) mittels eines Außengewindes (55a) in ein Innengewinde (31f) der Wandöffnung (31a) der ersten Wand (31) eingeschraubt ist,
- wobei das Halteelement (55) eine Halteöffnung (55c) aufweist, in der ein Bolzenkopf (53) des Durchgangsbolzens (5) gehalten ist,
- wobei die Halteöffnung (55c) sich in Richtung zur zweiten Wand (32) aufweitend ausgebildet ist, und/oder
- wobei der Bolzenkopf (53) des Durchgangsbolzens (5) sich in Richtung zur ersten Wand (31) verjüngend ausgebildet ist.

29. Antriebsanordnung nach Anspruch 27,
- wobei das Halteelement (55) in der Wandöffnung (31a) der ersten Wand (31) angeordnet ist,
- wobei der Bolzenkopf (53) des Durchgangsbolzens (5) ein Außengewinde (53c) aufweist,
- wobei das Halteelement (55) auf das Außengewinde (53c) des Bolzenkopfes (53) aufgeschraubt ist,
- wobei das Halteelement (55) eine sich in Richtung zur zweiten Wand (32) verjüngende Mantelfläche (55b) aufweist, und/oder
- wobei die Wandöffnung (31a) der ersten Wand (31) sich in Richtung zur zweiten Wand (32) verjüngend ausgebildet ist.

30. Antriebsanordnung nach einem der vorhergehenden Ansprüche,
- wobei jede Hülse (41, 42) einen Pressbereich (43a) aufweist, und
- wobei zwischen dem Pressbereich (43a) und der Durchgangsbohrung (20) ein Presssitz ausgebildet ist.

31. Antriebsanordnung nach einem der vorhergehenden Ansprüche, wobei die Durchgangsbohrung (20) mittig einen Zentrierbereich (20a) aufweist, der einen kleineren Innendurchmesser als der Rest der Durchgangsbohrung (20) aufweist, zur Zentrierung der beiden Hülsen (41, 42).

32. Antriebsanordnung nach einem der vorhergehenden Ansprüche, wobei der Durchgangsbolzen (5) als Schraube ausgebildet ist, und wobei der Durchgangsbolzen in ein Innengewinde (32a) der zweiten Wand (32) eingeschraubt ist.

33. Antriebsanordnung nach einem der Ansprüche 1 bis 31,
- wobei der Durchgangsbolzen (5) als Schraube ausgebildet ist, und
- wobei der Durchgangsbolzen (5) in eine Mutter (51), welche an der zweiten Wand (32) angeordnet ist, eingeschraubt ist.

34. Antriebsanordnung nach Anspruch 33, wobei die Mutter (51) verdrehsicher in einer Ausnehmung (32b) der zweiten Wand (32) angeordnet ist.

35. Antriebsanordnung nach einem der Ansprüche 3 bis 34,
- wobei der Flansch (44) von zumindest einer Hülse (41, 42) eine Dicke (41h) aufweist, die im Wesentlichen einer Wandstärke (43h) des Schafts (43) der Hülse (41, 42) entspricht, oder
- wobei der Flansch (44) von zumindest einer Hülse (41, 42) eine Dicke (41h) aufweist, die mindestens dem 1,5-fachen einer Wandstärke (43h) des Schafts (43) der Hülse (41, 42) entspricht.

36. Fahrzeug, insbesondere mit Muskelkraft und/oder Motorkraft betreibbares Fahrzeug, vorzugsweise Elektrofahrrad, umfassend eine Antriebsanordnung (1) nach einem der vorhergehenden Ansprüche.

37. Fahrzeug nach Anspruch 36, ferner umfassend ein Kettenblatt (106), welches mit einer Abtriebswelle (108) der Antriebseinheit (2) verbunden ist, und wobei die zweite Wand (32) der Antriebsanordnung (1) auf der Seite des Kettenblatts (106) angeordnet ist.
